# EUROPEAN PATENT APPLICATION

(11) **EP 4 674 772 A1**
(43) Date of publication of application: **07.01.2026**
(21) Application number: 24785131.4
(22) Date of filing: 01.04.2024
(51) Int. Cl.: B65B 65/00, B65B 57/10, B65B 57/02, B65C 3/20, B65C 3/10, B07C 5/342, B65C 9/40

(54) **PRODUCTION AUTOMATION SYSTEM**

(30) Priority: 06.04.2023 KR 20230045336
(71) Applicant: Seegene, Inc., Seoul 05548 (KR)
(72) Inventor: HAN, Yoo Jun, Anyang-si, Gyeonggi-do 14044 (KR); JEONG, Won Seok, Seoul 08719 (KR); LIM, Hyun Jin, Seoul 06927 (KR)
(74) Representative: Beck & Rössig European Patent Attorneys
(86) International application number: PCT/KR2024/004153
(87) International publication number: WO 2024/210425

(57) **Abstract**

This production automation system for handling tubes in which a solution can be accommodated, a body capped with a lid being defined as a tube, may comprise: a first supply device for grouping bodies or tubes into groups of at least two and supplying the plurality of groups of bodies or the plurality of groups of tubes; a dispensing device including dispensing units, each unit dispensing, in a single dispensing process step, the solution to each body of one group among the plurality of groups of bodies; a first vision inspection device for inspecting, in a single defective dispensing inspection process step, whether the dispensing of the solution accommodated in each body of one group is defective; a first defect product box including a number of defective dispensing spaces, the number of defective dispensing spaces being the same as the number of dispensing units; a transfer device for holding each tube of one group and transferring the one group of tubes; and a control unit for controlling the transfer device so that a tube with defective dispensing, among the one group of tubes inspected by the first vision inspection device, is discharged into a preset defective dispensing space among the defective dispensing spaces.

## Description

### TECHNICAL FIELD

Embodiments relate generally to an automated production system. More particularly, embodiments of the present inventive concept relate to an automated production system producing a tube where a solution is accommodated and a label is attached.

### BACKGROUND ART

In an automated production system, an apparatus for transferring a tube may transfer a tube of a half-finished product state to a plurality of process devices through the conveyor so that the tube is produced in a complete product.

For example, the tube includes a body and a cap, and the body may be provided to the conveyor through a body feeding device. While the body is moved through the conveyor, a solution may be dispensed into the body through a dispensing device, and then the cap may be provided to the body through a cap feeding device. The cap may be capped to the body through a capping device. After the capping process, a labeling process may be performed on the tube containing the solution through a labeling device.

In addition, in order to increase a process throughput in one process among the plurality of processes, the dispensing device, the cap feeding device, and the capping device may include a plurality of units, and the same process may be simultaneously performed through the plurality of units. In the automated production system, when a failure occurs in at least one unit among the units of the dispensing device, the units of the cap feeding device, and the units of the capping device, there is a problem in that an operator may not accurately identify the failed unit.

Further, the labeling device may perform a process of printing characters on a label to be attached to the cap of the tube, and then perform a process of attaching the label to the cap. In addition, after the labeling device may perform the process of printing the characters on the label to be attached to the body of the tube, the labeling device may perform a process of attaching the label to the body. When a defect occurs in at least one process among the processes of the labeling device, the operator has to visually check the labeling state of all the tubes in order to find the process in which the defect has occurred. In such a case, there is a problem in that a relatively large amount of time is consumed.

### DETAILED DESCRIPTION OF THE INVENTION

### TECHNICAL PROBLEM

An object of a present invention provides an automated production system.

However, the present invention is not limited to the object described above, and may be expanded in various ways without departing from the spirit and scope of the present invention.

### SOLUTION TO PROBLEM

In order to achieve the object of the present invention described above, in an automated production system handling a tube capable of containing a solution and a body capped with a cap being defined as the tube according to exemplary embodiments of the present invention, the automated production system may include a first feeding device feeding a plurality of grouped bodies or a plurality of grouped tubes, each of the grouped bodies including at least two bodies, each of the grouped tubes including at least two tubes, a dispensing device including dispensing units that dispense a solution to each of the bodies included in one grouped bodies among the plurality of grouped bodies, in a single dispensing process step, a first vision inspection device inspecting whether a dispensing defect of the solution contained in each of the bodies included in one grouped bodies occurs, in a single dispensing defect inspection process step, a first defect product box including dispensing defect spaces where the number of the dispensing defect spaces is the same as the number of the dispensing units, a transferring device transferring each of the tubes included in one grouped tubes by gripping each of the tubes, and a controller configured to control the transferring device so that a dispensing defect tube among the tubes included in one grouped tubes inspected from the first vision inspection device is released to a predetermined dispensing defect space among the dispensing defect spaces.

In exemplary embodiments, the number of the bodies included in one grouped bodies or the number of the tubes included in one grouped tubes may be the same as the number of the dispensing units and the number of the dispensing defect spaces.

In exemplary embodiments, the tubes included in one grouped tubes may include first to n-th tubes, where n is an integer more than 4, and the dispensing units may include first to n-th dispensing units. The first defect product box may include first to n-th dispensing defect spaces. The controller may be configured to control the transferring device so that a k-th tube among the first to n-th tubes is released to a k-th dispensing defect space among the first to n-th dispensing defect spaces, when the first vision inspection device detects a dispensing defect of the k-th tube, where k is an integer between 1 and n. The transferring device may provide remaining tubes except for the k-th tube among the first to n-th tubes to an external feeding device, after the k-th tube is released to the k-th dispensing defect space.

In exemplary embodiments, the automated production system may further include a cap feeding device providing the cap to each of the bodies included in one grouped bodies where the solution is dispensed, in a single cap feeding process step and a capping device including capping units that caps the cap provided to each of the bodies included in one grouped bodies, in a single capping process step.

In exemplary embodiments, the automated production system may further include a second vision inspection device inspecting whether a capping defect of the cap capped with each of the bodies included in one grouped bodies occurs, in a single capping defect inspection process step and a second defect product box including capping defect spaces where the number of the capping defect spaces is the same as or greater than the number of the capping units.

In exemplary embodiments, the controller may be configured to control the transferring device so that a capping defect tube among the tubes included in one grouped tubes inspected from the second vision inspection device is released to a predetermined capping defect space among the capping defect spaces.

In exemplary embodiments, the tubes included in one grouped tubes may include first to n-th tubes, where n is an integer more than 4, and the second defect product box may include first to n-th capping defect spaces. The controller may be configured to control the transferring device so that a j-th tube among the first to n-th tubes is released to a j-th capping defect space among the first to n-th capping defect spaces, when the second vision inspection device detects a capping defect of the j-th tube, where j is an integer between 1 and n. The transferring device may provide remaining tubes except for the j-th tube among the first to n-th tubes to an external feeding device, after the j-th tube is released to the j-th capping defect space.

In exemplary embodiments, the tubes included in one grouped tubes may include first to n-th tubes, where n is an integer more than 4, and the capping units may include first to (n/2)th capping units. The second defect product box may include first to (n/2)th capping defect spaces.

In exemplary embodiments, the first vision inspection device may include a first camera tilted at a predetermined angle from an upper surface of the solution to capture the upper surface of the solution contained in the body. The second vision inspection device may include a second camera facing the capped cap to capture a shape of the cap capped with the body.

In exemplary embodiments, the automated production system may further include a first display device displaying the upper surface of the solution contained in the body and the shape of the cap capped with the body.

In exemplary embodiments, the automated production system may further include a second feeding device sequentially feeding the tubes, a first labeling device attaching a first label to the cap of each of the tubes, a third vision inspection device inspecting whether a defect of the first label attached to the cap of each of the tubes occurs, a second labeling device attaching a second label to the body of each of the tubes, fourth and fifth vision inspection devices inspecting whether a defect of the second label attached to the body of each of the tubes occurs, a third defect product box where a first label defect tube among the tubes inspected from the third vision inspection device is released, and fourth and fifth defect product boxes where a second label defect tube among the tubes inspected from the fourth and fifth vision inspection devices is released.

In exemplary embodiments, the automated production system may further include first, second, and third removing members positioned adjacent to the third, fourth, and fifth defect product boxes and removing the tube located in the second feeding device from the second feeding device.

In exemplary embodiments, each of the first, second, and third removing members may include an air blower removing the tube located in the second feeding device by using air.

In exemplary embodiments, the first labeling device may include a first printer printing a text on the first label and a first attaching unit attaching the printed first label to the cap of the tube. The third vision inspection device may include a third camera facing the cap to capture the text printed on the first label that is attached to the cap and a position of the first label attached to the cap. The automated production system may further include a second display device displaying the text printed on the first label that is attached to the cap and a position of the first label attached to the cap.

In exemplary embodiments, the controller may be configured to control the first removing member so that a tube, where the text printed on the first label that is attached to the cap among the tubes inspected from the third vision inspection device is defective, and/or a tube, where the position of the first label that is attached to the cap among the tubes inspected from the third vision inspection device is defective, are/is released to the third defect product box.

In exemplary embodiments, the second labeling device may include a second printer printing a text on the second label and a second attaching unit attaching the printed second label to the body of the tube. The fourth vision inspection device may include a fourth camera facing the printed second label between the second printer and the second attaching unit to capture the text printed on the second label. The fifth vision inspection device may include a fifth camera spaced apart from the fourth camera to capture a position of the second label attached to the body. The automated production system may further include a third display device displaying the text printed on the second label and a fourth display device displaying the position of the second label attached to the body.

In exemplary embodiments, the controller may be configured to control the second removing member so that a tube attaching a second label, where the printed text is defective, among the second labels including the printed text which are inspected from the fourth vision inspection device is released to the fourth defect product box and the third removing member so that a tube, where the position of the second label attached to the body among the tubes inspected from the fifth vision inspection device is defective, is released to the fifth defect product box.

In order to achieve the object of the present invention described above, in an automated production system handling a tube capable of containing a solution and a body capped with a cap being defined as the tube according to exemplary embodiments of the present invention, the automated production system may include a first feeding device feeding a plurality of grouped bodies or a plurality of grouped tubes, each of the grouped bodies including at least two bodies, each of the grouped tubes including at least two tubes, a dispensing device including dispensing units that dispense a solution to each of the bodies included in one grouped bodies among the plurality of grouped bodies, in a single dispensing process step, a cap feeding device providing the cap to each of the bodies included in one grouped bodies where the solution is dispensed, in a single cap feeding process step, a capping device including capping units that cap the cap provided to each of the bodies included in one grouped bodied, in a single capping process step, a first vision inspection device inspecting whether a dispensing defect of the solution contained in each of the bodies included in one grouped bodies occurs, in a single dispensing defect inspection process step, a second vision inspection device inspecting whether a capping defect of the cap capped with each of the bodies included in one grouped bodies occurs, in a single capping defect inspection process step, a first defect product box including dispensing defect spaces where the number of the dispensing defect spaces is the same as the number of the dispensing units, a second defect product box including capping defect spaces where the number of the capping defect spaces is the same as or greater than the number of the capping units, a transferring device transferring each of the tubes included in one grouped tubes by gripping each of the tubes, a second feeding device sequentially feeding the tubes, a first labeling device attaching a first label to the cap of each of the tubes, a third vision inspection device inspecting whether a defect of the first label attached to the cap of each of the tubes occurs, a second labeling device attaching a second label to the body of each of the tubes, fourth and fifth vision inspection devices inspecting whether a defect of the second label attached to the body of each of the tubes occurs, a third defect product box where a first label defect tube among the tubes inspected from the third vision inspection device is released, fourth and fifth defect product boxes where a second label defect tube among the tubes inspected from the fourth and fifth vision inspection devices is released, a controller configured to control the transferring device so that a dispensing defect tube of the tubes included in one grouped tubes inspected from the first vision inspection device is released to a predetermined dispensing defect space of the dispensing defect spaces, first, second, and third removing members positioned adjacent to the third, fourth, and fifth defect product boxes, the first, second, and third removing members removing the tube located in the second feeding device from the second feeding device, and a controller configured to control the transferring device so that a dispensing defect tube among the tubes included in one grouped tubes inspected from the first vision inspection device is released to a predetermined dispensing defect space among the dispensing defect spaces, the transferring device so that a capping defect tube among the tubes included in one grouped tubes inspected from the second vision inspection device is released to a predetermined capping defect space among the capping defect spaces, the first removing member so that a tube, where a text printed on the first label that is attached to the cap among the tubes inspected from the third vision inspection device is defective, and/or a tube, where a position of the first label that is attached to the cap among the tubes inspected from the third vision inspection device is defective, are/is released to the third defect product box, the second removing member so that a tube attaching a second label, where the printed text is defective, among the second labels including the printed text which are inspected from the fourth vision inspection device is released to the fourth defect product box, and the third removing member so that a tube, where the position of the second label attached to the body among the tubes inspected from the fifth vision inspection device is defective, is released to the fifth defect product box.

In order to achieve the object of the present invention described above, in an automated production system a tube capable of containing a solution according to exemplary embodiments of the present invention, the automated production system may include a feeding device feeding a plurality of grouped tubes, each of the grouped tubes including at least two tubes, a first processing device including a plurality of first units that perform a first process to each of tubes included in one grouped tubes among the plurality of grouped tubes, in a single first process step, a first inspection device inspecting a first defect type of each of the tubes included in one grouped tubes, a first defect product box including first defect spaces where the number of the first defect spaces is the same as the number of the first units, a transferring device transferring each of the tubes included in one grouped tubes by gripping each of the tubes, and a controller configured to control the transferring device so that a tube, which corresponds to the first defect type, among the tubes included in one grouped tubes inspected from the first inspection device is released to a predetermined first defect space among the first defect spaces.

In exemplary embodiments, the automated production system may further include a second processing device including a plurality of second units that perform a second process to each of the tubes included in one grouped tubes, in a single second process step, a second inspection device inspecting a second defect type, which is different from the first defect type, of the tubes, and a second defect product box including second defect spaces where the number of the second defect spaces is the same as the number of the second units. The controller may be configured to control the transferring device so that a tube, which corresponds to the second defect type, among the tubes included in one grouped tubes inspected from the second inspection device is released to a predetermined second defect space among the second defect spaces.

### ADVANTAGEOUS EFFECTS OF INVENTION

As the automated production system according to exemplary embodiments of the present invention includes the controller, the transferring unit, the first vision inspection device, the second vision inspection device, the first defect product box, and the second defect product box, the controller that receives a position information of the tube, where a defect has occurred, from the first and second vision inspection devices may control the transferring unit so that the defect tube is released to a predetermined space of the first and second defect product boxes, and the operator using the automated production system may predict the cause of the defect tube and check the type of the defects. For example, the operator may count the number of dispensing defect tubes stored in the first defect product box to predict a dispensing unit, which is failed, among the dispensing units of the dispensing device, and may check the dispensing defect tubes 10 to check the type of the defects. In addition, the operator may count the number of capping defect tubes stored in the second defect product box to predict a capping unit, which is failed, among the capping units of the capping device, and may check the capping defect tubes to check the type of the defects. Accordingly, the operator using the automated production system may accurately predict the failed unit among the dispensing units or the capping units, and the failed unit may be relatively quickly repaired or replaced to relatively reduce a supply error rate by checking the type of the defects.

In addition, since a tube, where a dispensing defect has occurred, is stored in the dispensing defect space of the first defect product box and a tube, where a capping defect has occurred, is stored in the capping defect space of the second defect product box, the tube, where the defect has occurred, may be isolated in the first and second defect product boxes, and the tube, where the defect has occurred, may not be fed to the second feeding device. Accordingly, outflow of the tube, where the defect has occurred, may be prevented.

In addition, as the automated production system according to exemplary embodiments of the present invention include the controller, the first to third removing members, the third vision inspection device, the fourth vision inspection device, the fifth vision inspection device, the third defect product box, the fourth defect product box, and the fifth defect product box, the controller that receives a position information of tube, where a defect has occurred, from the third to fifth vision inspection devices may control the first to third removing members so that the tube, where the defect has occurred, is released to the third to fifth defect product boxes, respectively, and the operator using the automated production system may predict the cause of the defect tube and check the type of defects. For example, the operator may count the number of tubes, where the first label is defective, stored in the third defect product box, and then may predict whether a failure of the first labeling device occurs. The operator may check the tubes where the first label is defective, and then may predict the type of defects. In addition, the operator may count the number of tube, where the second label is defective, stored in the fourth defect product box, and then may predict whether a failure of the second printer of the second labeling device occurs. The operator may count the number of tube, where the second label is defective, stored in the fifth defect product box, and then may predict whether a failure of the second attaching unit of the second labeling device occurs. Accordingly, as the operator using the automated production system accurately predicts a failed equipment among the first printer and the first attaching unit of the first labeling device and the second printer and the second attaching unit of the second labeling device, the failed equipment may be relatively quickly repaired or replaced to relatively reduce a supply error rate.

In addition, since the tube, where the first and second labels are defective, are stored in the third to fifth defect product boxes, the tube, where the defect has occurred, may be isolated in the third to fifth defect product boxes, and the tube, where the defect has occurred, may not be fed to other feeding device. Accordingly, outflow of the tubes, where the defect has occurred, may be prevented.

However, the effect of the present invention is not limited to the effects described above, and may be expanded in various ways without departing from the spirit and scope of the present invention.

### BRIEF DESCRIPTION OF THE DRAWINGS

FIG. 1 is a block diagram illustrating an automated production system according to exemplary embodiments of a present invention.
FIGS. 2 and 3 are perspective views schematically illustrating the automated production system of FIG. 1.
FIG. 4 is a diagram for describing a tube that is fed to first and second feeding devices included in the automated production system of FIGS. 2 and 3.
FIGS. 5, 6, 7, 8, 9, 10, 11, 12, 13, 14, 15, 16, 17, 18, 19, 20, 21, 22, 23, 24, 25, 26, and 27 are diagrams for describing the automated production system of FIGS. 2 and 3.

### MODE FOR THE INVENTION

Hereinafter, an automated production system according to exemplary embodiments of the present invention will be described in detail with reference to the accompanying drawings. In the accompanying drawings, same or similar reference numerals refer to the same or similar elements.

In present specification, specific structural and functional descriptions are merely exemplified for the purpose of explaining embodiments of the present invention, and the embodiments of the present invention may be implemented in various forms and are not construed as being limited to the embodiments described in the present specification, but should be understood to include all modifications, equivalents, and substitutes included in the spirit and technical scope of the present invention. When a component is described as being "connected" or "in contact with" another component, it should be understood that it may be directly connected or in contact with the other component, but another component may exist in between. In addition, when a component is described as being "directly connected" or "in direct contact with" another component, it may be understood that there is no another component in between. Other expressions describing the relationship between components, such as "between" and "directly between" or "adjacent to" and "directly adjacent to", may be interpreted in the same way.

The terminology used in the present invention is for the purpose of describing embodiments only and is not intended to be limiting of the present invention. The singular expression includes the plural expression unless the context clearly indicates otherwise. In the present specification, it should be understood that the terms "comprise," "include," or "have" are intended to specify the presence of a feature, number, step, operation, component, part, or combination thereof, but do not exclude in advance the possibility of the presence or addition of one or more other features, numbers, steps, operations, components, parts, or combinations thereof. Unless otherwise defined, all terms used herein, including technical or scientific terms, have the same meaning as commonly understood by one of ordinary skill in the art to which this present invention belong.

Terms defined in commonly used dictionaries should be interpreted as having a meaning consistent with their meaning in the context of the relevant art, and will not be interpreted in an idealized or overly formal sense unless expressly defined in the present specification.

The terms first, second, and third may be used to describe various components, but these components are not limited by the terms. The terms are used for the purpose of distinguishing one component from another. For example, without departing from the scope of the present invention, the first component may be referred to as the second or third component, and similarly, the second or third component may be referred to interchangeably.

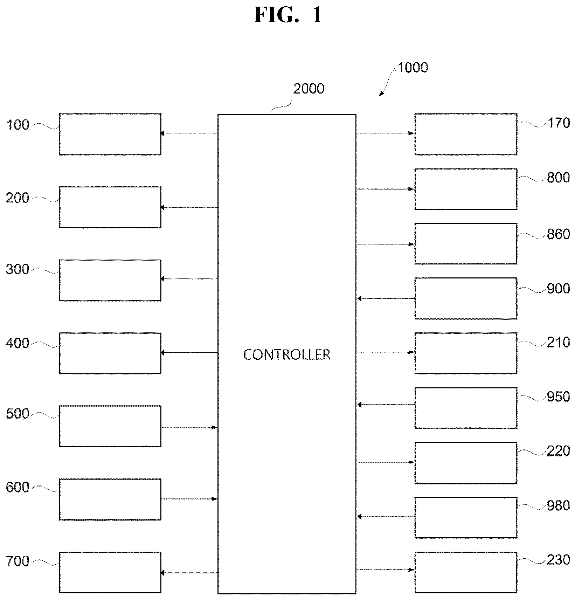

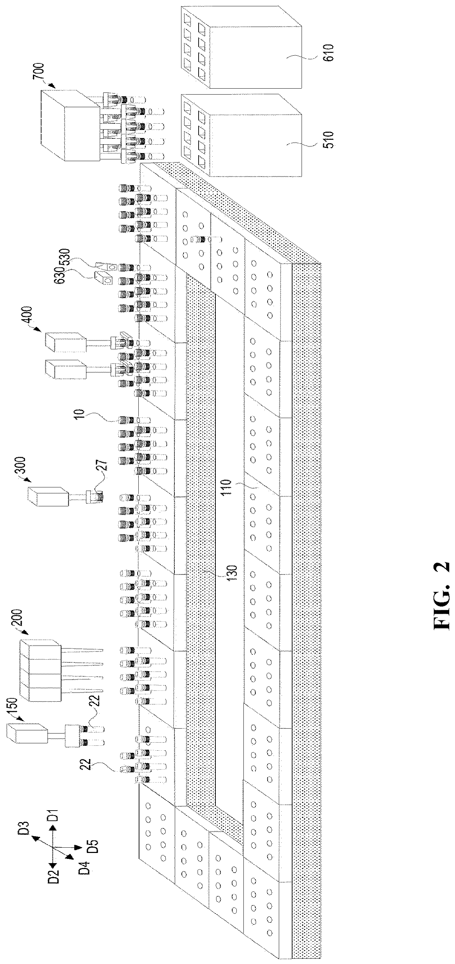

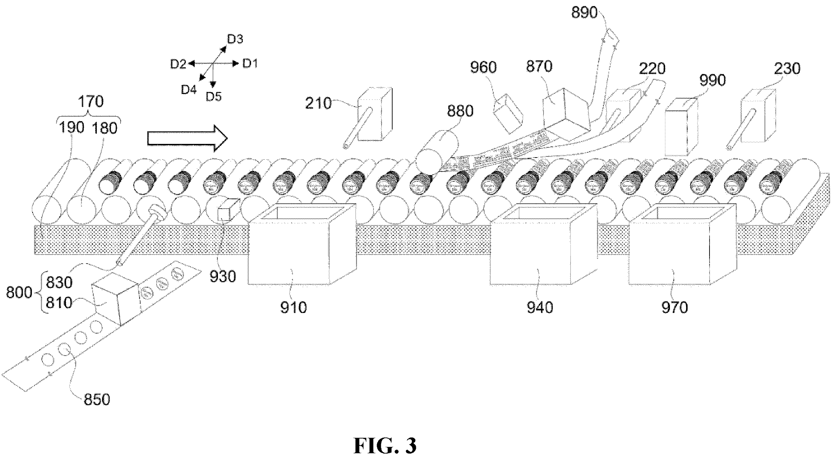

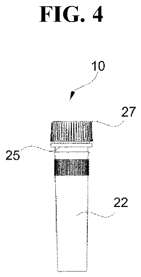

FIG. 1 is a block diagram illustrating an automated production system according to exemplary embodiments of a present invention, and FIGS. 2 and 3 are perspective views schematically illustrating the automated production system of FIG. 1. FIG. 4 is a diagram for describing a tube that is fed to first and second feeding devices included in the automated production system of FIGS. 2 and 3.

Referring to FIGS. 1, 2, 3, and 4, an automated production system 1000 may include a first feeding device 100, a dispensing device 200, a cap feeding device 300, a capping device 400, a first vision inspection device 500, a second vision inspection device 600, a transferring device 700, a second feeding device 170, a first labeling device 800, a second labeling device 860, a third vision inspection device 900, a first removing member 210, a fourth vision inspection device 950, a second removing member 220, a fifth vision inspection device 980, a third removing member 230, a first defect product box 510, a second defect product box 610, a third defect product box 910, a fourth defect product box 940, a fifth defect product box 970, a first display device 650, a second display device 660, a third display device 670, a fourth display device 680, and a controller 2000.

The controller 2000 may control the first feeding device 100, the dispensing device 200, the cap feeding device 300, the capping device 400, the transferring device 700, the second feeding device 170, the first labeling device 800, the second labeling device 860, the first removing member 210, the second removing member 220, and the third removing member 230.

In exemplary embodiments, each of the first vision inspection device 500, the second vision inspection device 600, the third vision inspection device 900, the fourth vision inspection device 950, and the fifth vision inspection device 980 may provide an information of a tube 10 determined to be defective to the controller 2000.

As illustrated in FIG. 4, the tube 10 may include a body 22 and a cap 27. The body 22 may have a cylindrical shape, and a protrusion 25 may be formed on a side surface of the body 22 (e.g., a neck of the tube). In addition, the body 22 may be capped (or sealed) with the cap 27. Further, a liquid solution may be contained in the body 22. In the automated production system 1000, the body 22 capped with the cap 27 may be defined as the tube 10, and the automated production system 1000 may handle the tube 10 in which the solution 30 may be accommodated.

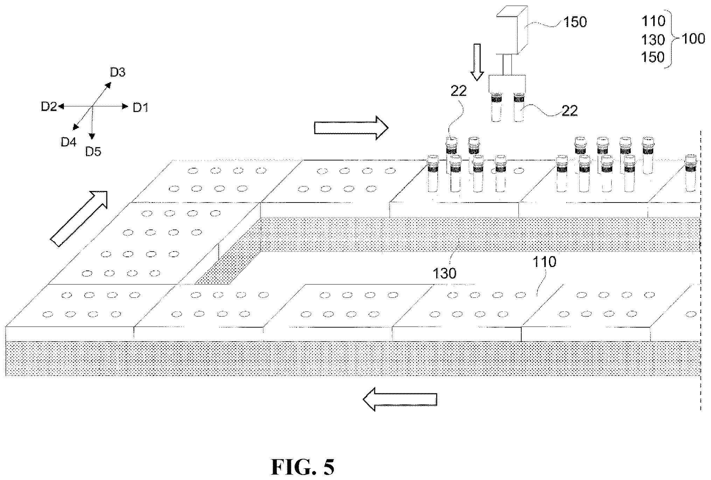

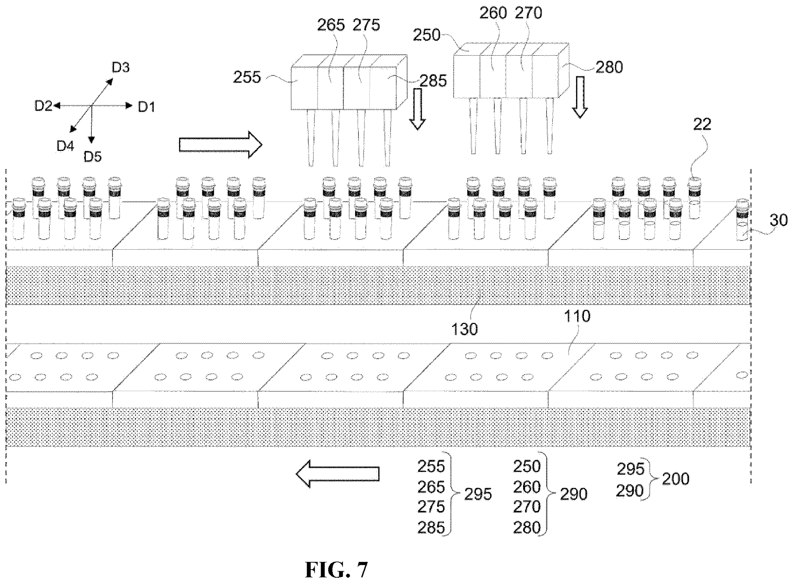

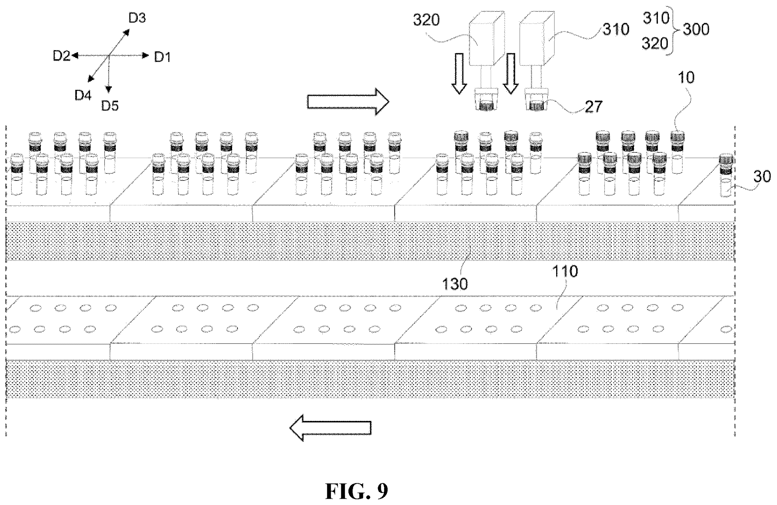

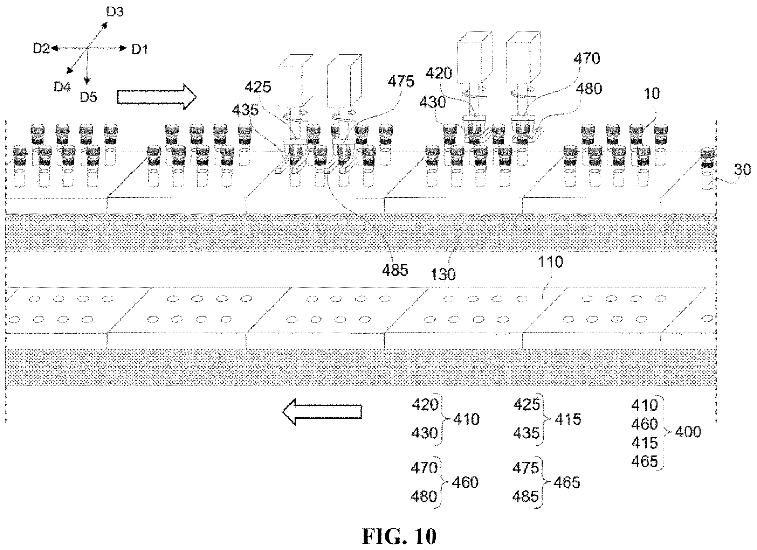

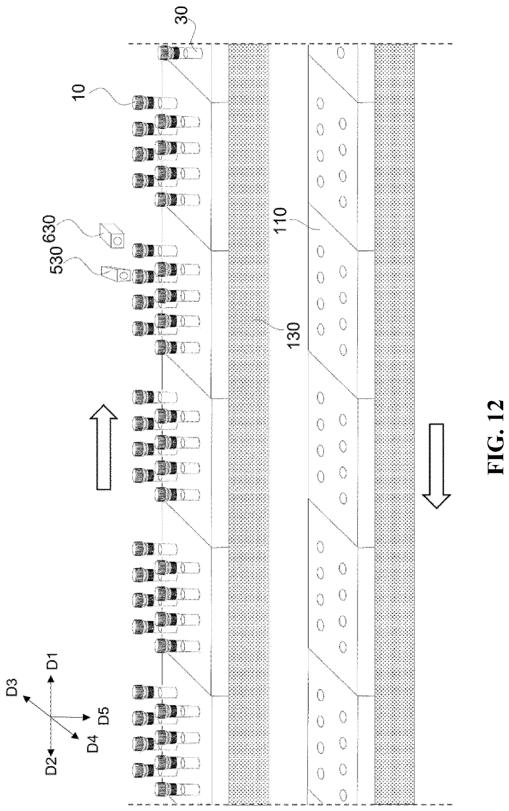

FIGS. 5, 6, 7, 8, 9, 10, 11, 12, 13, 14, 15, 16, 17, 18, 19, 20, 21, 22, 23, 24, 25, 26, and 27 are diagrams for describing the automated production system of FIGS. 2 and 3.

Referring to FIGS. 1, 2, 5, and 6, the first feeding device 100 may include tube holding plates 110, a first conveyor 130, a body feeding device 150, etc.

The first conveyor 130 may extend in a first direction D1, a second direction D2, a third direction D3, and a fourth direction D4, and the first conveyor 130 may move the tube holding plates 110 in a clockwise direction. For example, when viewed from a fifth direction D5, the first conveyor 130 may have a loop shape, and the first conveyor 130 may move the tube holding plates 110 along the loop shape. Here, the first direction D1 and the second direction D2 are substantially opposite to each other, and the third direction D3 and the fourth direction D4 are substantially opposite to each other. The first to fourth directions D1, D2, D3, and D4 may be substantially orthogonal to each other, and the first to fourth directions D1, D2, D3, and D4 and the fifth direction D5 may be substantially orthogonal to each other. Alternatively, the first conveyor 130 may move the tube holding plates 110 in a counterclockwise direction according to a process order.

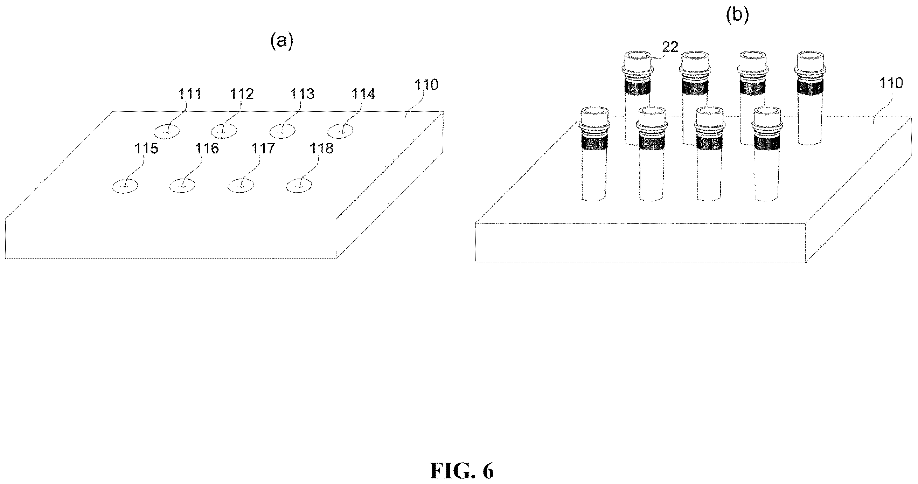

The plurality of tube holding plates 110 may be disposed on the first conveyor 130. In exemplary embodiments, as illustrated in FIG. 6, first to eighth grooves 111, 112, 113, 114, 115, 116, 117, and 118 may be formed in each of the tube holding plates 110, and a portion of each of eight bodies 22 may be inserted into the first to eighth grooves 111, 112, 113, 114, 115, 116, 117, and 118. Each of the eight bodies 22 may be stood on the tube holding plate 110. Each of the tube holding plates 110 of the first feeding device 100 may group the eight bodies 22 and feed the grouped eight bodies 22 along the first direction D1. In other words, a plurality of grouped eight bodies 22 may move through the tube holding plates 110. That is, the first feeding device 100 may group at least two bodies 22 and feed a plurality of grouped at least two bodies 22. For example, the first conveyor 130 may be a side-band type conveyor, and the tube holding plate 110 may include a plastic such as acetal, mono cast nylon, polyether ether ketone (PEEK), polyacrylether ketone (PAEK), polyether imide (PEI), polyether sulfone (PES), etc.

The body feeding device 150 may provide the body 22 to the first to eighth grooves 111, 112, 113, 114, 115, 116, 117, and 118 of the tube holding plate 110. For example, the first feeding device 100 may further include a body storage for storing the bodies 22, and the body feeding device 150 may be connected to a robot arm capable of moving in up-down directions (e.g., a direction opposite to the fifth direction D5 and the fifth direction D5), left-right directions (e.g., the second direction D2 and the first direction D1), and front-rear directions (e.g., the fourth direction D4 and the third direction D3). The body feeding device 150 may grip the bodies 22 from the body storage, and may provide the bodies 22 to the tube holding plate 110.

In exemplary embodiments, the controller 2000 may control the first feeding device 100 so that the body feeding device 150 provides the body 22 to the tube holding plate 110. In addition, the controller 2000 may control the first feeding device 100 so that the tube holding plate 110 is movable in the clockwise direction, and the controller 2000 may control the tube holding plate 110 to stop while various process steps (e.g., a dispensing process step, a cap feeding process step, a capping process step, a dispensing defect inspection process step, a capping defect inspection process step, etc.), which will be described below, are performed.

However, although it has been described that eight grooves are formed in the tube holding plate 110 of the present invention, a configuration of the present invention is not limited thereto. For example, at least two grooves may be formed in the tube holding plate 110. For example, when four grooves are formed in the tube holding plate 110, four bodies 22 may be grouped, or four tubes 10 may be grouped.

Referring to FIGS. 1, 2, and 7, the dispensing device 200 may include a first dispensing unit group 290 and a second dispensing unit group 295. The first dispensing unit group 290 may include first, second, third, and fourth dispensing units 250, 260, 270, and 280, and the second dispensing unit group 295 may include fifth, sixth, seventh, and eighth dispensing units 255, 265, 275, and 285. Each of the first to eighth dispensing units 250, 260, 270, 280, 255, 265, 275, and 285 may dispense a solution 30 to each of bodies 22 inserted into the tube holding plate 110.

For example, the dispensing device 200 may further include a solution reservoir for storing the solution 30, and each of the first dispensing unit group 290 and the second dispensing unit group 295 may be connected to a robot arm capable of moving in the up-down directions, the left-right directions, and the front-rear directions. Here, the first to fourth dispensing units 250, 260, 270, and 280 may be integrally moved, and the fifth to eighth dispensing units 255, 265, 275, and 285 may be integrally moved. After the body feeding device 150 performs a process of providing the body 22 to the tube holding plate 110, the tube holding plate 110 may move in the first direction D1, and each of the first to eighth dispensing units 250, 260, 270, 280, 255, 265, 275, and 285 may aspirate the solution 30 from the solution reservoir.

In addition, the first dispensing unit 250 may dispense the solution 30 to the body 22 inserted into the first groove 111 of the tube holding plate 110, and the second dispensing unit 260 may dispense the solution 30 to the body 22 inserted into the second groove 112 of the tube holding plate 110. The third dispensing unit 270 may dispense the solution 30 to the body 22 inserted into the third groove 113 of the tube holding plate 110, and the fourth dispensing unit 280 may dispense the solution 30 to the body 22 inserted into the fourth groove 114 of the tube holding plate 110. In other words, each of the first to fourth dispensing units 250, 260, 270, and 280 may substantially simultaneously dispense the solution 30 to the bodies 22 inserted into the first to fourth grooves 111, 112, 113, and 114, respectively.

Further, the fifth dispensing unit 255 may dispense the solution 30 to the body 22 inserted into the fifth groove 115 of the tube holding plate 110, and the sixth dispensing unit 265 may dispense the solution 30 to the body 22 inserted into the sixth groove 116 of the tube holding plate 110. The seventh dispensing unit 275 may dispense the solution 30 to the body 22 inserted into the seventh groove 117 of the tube holding plate 110, and the eighth dispensing unit 285 may dispense the solution 30 to the body 22 inserted into the eighth groove 118 of the tube holding plate 110. In other words, each of the fifth to eighth dispensing units 255, 265, 275, and 285 may substantially simultaneously dispense the solution 30 to the bodies 22 inserted into the fifth to eighth grooves 115, 116, 117, and 118, respectively. That is, the first to eighth dispensing units 250, 260, 270, 280, 255, 265, 275, and 285 may dispense the solution 30 to the body 22 positioned at a predetermined position of the tube holding plate 110.

In exemplary embodiments, each of the first to eighth dispensing units 250, 260, 270, 280, 255, 265, 275, and 285 of the dispensing device 200 may substantially simultaneously dispense the solution 30 to each of one grouped eight bodies 22 among a plurality of grouped eight bodies 22 in a single dispensing process step among a plurality of dispensing process steps.

In other exemplary embodiments, the tube holding plate 110 may include first to m-th tube holding plates, where m is an integer of 4 or more, and in the same process sequence, each of the first to fourth dispensing units 250, 260, 270, and 280 may substantially simultaneously dispense the solution 30 to the body 22 inserted into each of the first to fourth grooves 111, 112, 113, and 114 of a g-th tube holding plate 110 among the first to m-th tube holding plates 110, where g is an integer between 1 and m. In the same process sequence, each of the fifth to eighth dispensing units 255, 265, 275, and 285 may substantially simultaneously dispense the solution 30 to the body 22 inserted into each of the fifth to eighth grooves 115, 116, 117, and 118 of a (g-1)th tube holding plate 110 among the first to m-th tube holding plates 110. That is, the first to fourth dispensing units 250, 260, 270, and 280 may be positioned adjacent to the g-th tube holding plate 110, and the fifth to eighth dispensing units 255, 265, 275, and 285 may be positioned adjacent to the (g-1)th tube holding plate 110.

Each of the first to eighth dispensing units 250, 260, 270, 280, 255, 265, 275, and 285 may include a pipettor. The pipettor may include a tip or a needle, and the solution 30 may be aspirated and dispensed through the tip or the needle.

In exemplary embodiments, the controller 2000 may control the dispensing device 200 so that each of the first to eighth dispensing units 250, 260, 270, 280, 255, 265, 275, and 285 provide the solution 30 to the body 22. In addition, the number of the body 22 included in grouped bodies 22 (or the number of the tube 10 included in grouped tubes 10) may be the same as the number of the dispensing units of the dispensing device 200.

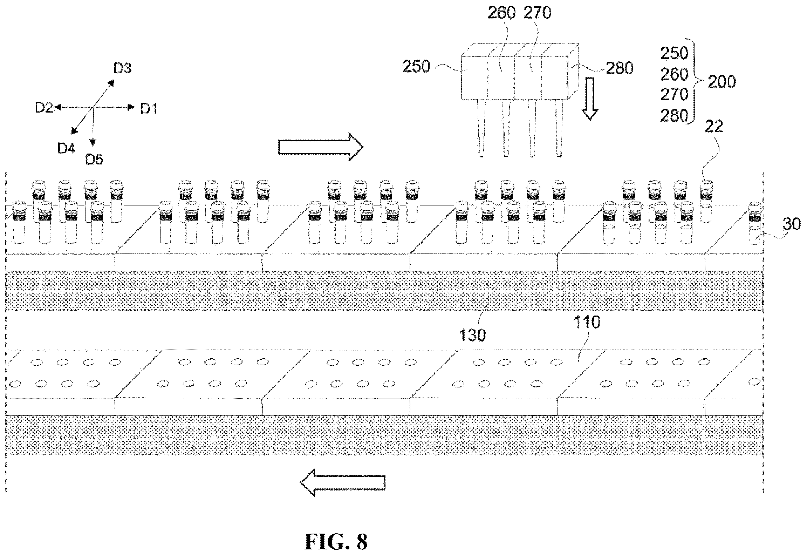

However, although the dispensing device 200 of the present invention has been described as including eight dispensing units, the configuration of the present invention is not limited thereto. For example, as illustrated in FIG. 8, the dispensing device 200 may include four dispensing units (e.g., the first to fourth dispensing units 250, 260, 270, and 280). In this case, after the four dispensing units dispense the solution 30 to the body 22 inserted into each of the first to fourth grooves 111, 112, 113, and 114, the four dispensing units may dispense the solution 30 to the body 22 inserted into each of the fifth to eighth grooves 115, 116, 117, and 118.

Referring to FIGS. 1, 2, and 9, the cap feeding device 300 may include a first cap feeding unit 310 and a second cap feeding unit 320. Each of the first and second cap feeding units 310 and 320 may provide the cap 27 to the body 22 inserted into the tube holding plate 110.

For example, the cap feeding device 300 may further include a cap reservoir for storing the caps 27, and each of the first and second cap feeding units 310 and 320 may include a gripper. In addition, each of the first and second cap feeding units 310 and 320 may be connected to a robot arm capable of moving in the up-down directions, the left-right directions, and the front-rear directions. After the dispensing device 200 performs a process of dispensing the solution 30 to the body 22, the tube holding plate 110 may be moved in a first direction D1, and each of the first and second cap feeding units 310 and 320 may grip the cap 27 from the cap reservoir through the gripper. Each of the first and second cap feeding units 310 and 320 may provide the cap 27 to the body 22 (e.g., the body 22 containing the solution 30).

In exemplary embodiments, the cap feeding device 300 may provide the cap 27 to each of one grouped eight bodies 22, to which the solution 30 has been dispensed, among a plurality of grouped eight bodies 22, in a single cap feeding process step among a plurality of cap feeding process steps.

Alternatively, after the cap 27 is provided to the body 22 through the gripper, the gripper may rotate so that the cap 27 is partially capped on the body 22. In this case, while the cap 27 provided to the body 22 is moved in the first direction D1, the cap 27 may not be easily separated from the body 22.

In exemplary embodiments, the controller 2000 may control the cap feeding device 300 so that the first and second cap feeding units 310 and 320 provide the cap 27 to the body 22.

However, although the cap feeding device 300 of the present invention has been described as including two cap feeding units, the configuration of the present invention is not limited thereto. For example, the cap feeding device 300 may include at least one cap feeding unit.

Referring to FIGS. 1, 2, and 10, the capping device 400 may include a first capping unit 410, a second capping unit 460, a third capping unit 415, and a fourth capping unit 465. Here, the first capping unit 410 may include a first gripper 420 and a first fixing member 430, and the second capping unit 460 may include a second gripper 470 and a second fixing member 480. The third capping unit 415 may include a third gripper 425 and a third fixing member 435, and the fourth capping unit 465 may include a fourth gripper 475 and a fourth fixing member 485. Each of the first to fourth capping units 410, 460, 415, and 465 may fully cap the cap 27 on a body 22 inserted into the tube holding plate 110.

For example, each of the first to fourth capping units 410, 460, 415, and 465 may be connected to a robot arm capable of moving in the up-down directions, the left-right directions, and the front-rear directions. Here, the first and second capping units 410 and 460 may be integrally moved, and the third and fourth capping units 415 and 465 may be integrally moved. After the cap feeding device 300 performs a process of providing the cap 27 to the body 22, the tube holding plate 110 may be moved in the first direction D1, and the bodies 22 (e.g., the bodies 22 on which the caps 27 have been provided) may be fixed through the first to fourth fixing members 430, 480, 435, and 485. After the first to fourth fixing members 430, 480, 435, and 485 fix the bodies 22, the caps 27 may be rotated through the first to fourth grippers 420, 470, 425, and 475. That is, the body 22 containing the solution 30 may be capped (or sealed) with the cap 27.

In other words, after the first capping unit 410 caps the cap 27 provided to the body 22 that is inserted into the first groove 111 of the tube holding plate 110, the first capping unit 410 may be moved in the first direction D1, and after the body 22 inserted into the second groove 112 of the tube holding plate 110 is fixed by the first fixing member 430, the first capping unit 410 may cap the cap 27 provided to the body 22 that is inserted into the second groove 112 through the first gripper 420. That is, the first capping unit 410 may perform only a capping process of the body 22 inserted into each of the first and second grooves 111 and 112 of the tube holding plate 110.

In addition, after the second capping unit 460 caps the cap 27 provided to the body 22 that is inserted into the third groove 113 of the tube holding plate 110, the second capping unit 460 may be moved in the first direction D1, and after the body 22 inserted into the fourth groove 114 of the tube holding plate 110 is fixed by the second fixing member 480, the second capping unit 460 may cap the cap 27 provided to the body 22 that is inserted into the fourth groove 114 through the second gripper 470. That is, the second capping unit 460 may perform only a capping process of the body 22 inserted into each of the third and fourth grooves 113 and 114 of the tube holding plate 110.

In addition, after the third capping unit 415 caps the cap 27 provided to the body 22 that is inserted into the fifth groove 115 of the tube holding plate 110, the third capping unit 415 may be moved in the first direction D1, and after the body 22 inserted into the sixth groove 116 of the tube holding plate 110 is fixed by the third fixing member 435, the third capping unit 415 may cap the cap 27 provided to the body 22 that is inserted into the sixth groove 116 through the third gripper 425. That is, the third capping unit 415 may perform only a capping process of the body 22 inserted into each of the fifth and sixth grooves 115 and 116 of the tube holding plate 110.

Further, after the fourth capping unit 465 caps the cap 27 provided to the body 22 that is inserted into the seventh groove 117 of the tube holding plate 110, the fourth capping unit 465 may be moved in the first direction D1, and after the body 22 inserted into the eighth groove 118 of the tube holding plate 110 is fixed by the fourth fixing member 485, the fourth capping unit 465 may cap the cap 27 provided to the body 22 that is inserted into the eighth groove 118 through the fourth gripper 475. That is, the fourth capping unit 465 may perform only a capping process of the body 22 inserted into each of the seventh and eighth grooves 117 and 118 of the tube holding plate 110.

In exemplary embodiments, the capping device 400 may cap the cap 27 provided to each of the bodies 10 included in one grouped bodies 10 among a plurality of grouped bodies 10 in a single capping process step among a plurality of capping process steps.

In exemplary embodiments, the control unit 2000 may control the capping device 400 so that the first to fourth capping units 410, 460, 415, and 465 cap the cap 27 onto the body 22. In addition, the number of the body 22 included in one grouped bodies 22 (or the number of the tube 10 included in one grouped tubes 10) may be twice the number of the capping unit included in the capping device 400. Further, as the cap 27 is capped with the body 22, the body 22 capped with the cap 27 is defined as a tube 10, and the tube holding plate 110 of the first supply device 100 may group eight tubes 10 and feed the grouped eight tubes 10 along the first direction D1. In other words, a plurality of grouped eight tubes 10 may be moved through the tube holding plates 110. That is, the first supply device 100 may group at least two tubes 10 and feed a plurality of grouped tubes 10.

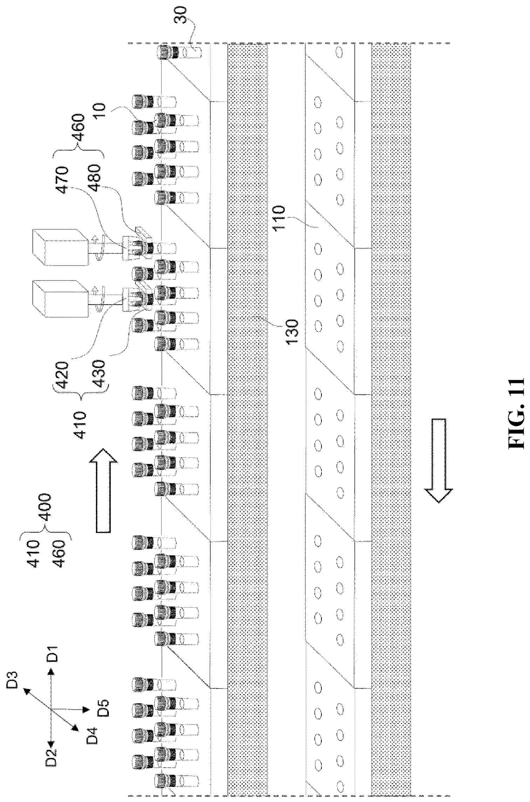

However, although the capping device 400 of the present invention has been described as including four capping units, the configuration of the present invention is not limited thereto. For example, as illustrated in FIG. 11, the capping device 400 may include two capping units (for example, the first and second capping units 410 and 460). In this case, after the two capping units cap the cap 27 provided to the body 22 that is inserted into each of the first to fourth grooves 111, 112, 113, and 114, the two capping units may be moved in the fourth direction D4 and cap the caps 27 provided to the body 22 that is inserted into each of the fifth to eighth grooves 115, 116, 117, and 118. Alternatively, the capping device 400 may include eight capping units (for example, the first to eighth capping units). In this case, each of the eight capping units may cap the cap 27 provided to the body 22 that is inserted into each of the first to eighth grooves 111, 112, 113, 114, 115, 116, 117, and 118. In other words, in consideration of factors such as a tact time, a throughput, unit cost, etc, an operator using the automated production system 1000 may determine whether the number of the capping unit, which is relatively more expensive than the dispensing unit, is the same as the number of the dispensing unit or is to half the number of the dispensing unit.

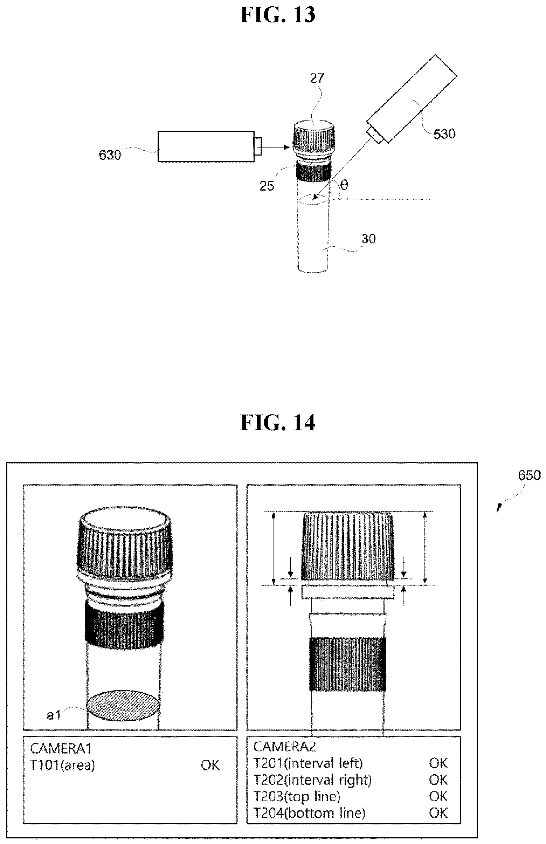

Referring to FIGS. 1, 2, 12, 13, and 14, the first vision inspection device 500 may inspect whether a dispensing defect of the solution 30 that is contained in each of the tubes 10 (or the bodies 22) inserted into the tube holding plate 110 occurs. The first vision inspection device 500 may include a first camera 530. As illustrated in FIG. 13, the first camera 530 may be tilted at a predetermined angle (θ) from an upper surface of the solution 30 to capture the upper surface of the solution 30 (or an area of the upper surface of the solution 30) contained in the tube 10 (or the body 22). For example, when the first camera 530 is positioned parallel to the upper surface of the solution 30 and a height of the solution 30 (e.g., a length from a bottom surface of the tube 10 to the upper surface of the solution 30) is equal to or greater than a level of the first camera 530 (e.g., the length from the bottom surface of the tube 10 to a portion where the first camera 530 is positioned), the first camera 530 may not capture the upper surface of the solution 30. Accordingly, the first camera 530 may be tilted at the predetermined angle (θ) from the upper surface of the solution 30 to accurately capture the area of the upper surface of the solution 30 contained in the body 22.

The second vision inspection device 600 may inspect whether a capping defect of the cap 27 that is capped to each of the bodies 22 inserted into the tube holding plate 110 occurs. The second vision inspection device 600 may include a second camera 630. As illustrated in FIG. 13, the second camera 630 may be positioned to face the capped cap 27 to capture a shape of the cap 27 capped with the body 22.

As illustrated in FIG. 14, the first display device 650 may display a first image captured by the first camera 530 and a second image captured by the second camera 630. In other words, the first display device 650 may display the upper surface of a solution 30 contained in the tube 10 and a shape of the cap 27 capped with the body 22.

For example, each of the first and second cameras 530 and 630 may be connected to a robot arm capable of moving in the left-right directions. After the capping device 400 performs a process of capping the cap 27, the tube holding plate 110 may move in the first direction D1, and the first and second cameras 530 and 630 may capture the upper surface of the solution 30 contained in the tube 10 and the shape of the cap 27 capped with the body 22 while the first and second cameras 530 and 630 move in the left-right directions.

In exemplary embodiments, the first vision inspection device 500 may inspect whether the dispensing defect of the solution 30 contained in each of the bodies 22 included in one grouped bodies 22 among a plurality of grouped bodies 22 occurs in a single dispensing defect inspection process step among a plurality of dispensing defect inspection process steps. In addition, the second vision inspection device 600 may inspect whether the capping defect of the cap 27 capped with each of the bodies 22 included in one grouped bodies 22 among the plurality of grouped bodies 22 occurs in single capping defect inspection process step among a plurality of capping defect inspection process steps.

In exemplary embodiments, the first vision inspection device 500 may control the first camera 530 so that the first camera 530 captures the upper surface of the solution 30 contained in the tube 10, and the second vision inspection device 600 may control the second camera 630 so that the second camera 630 captures the shape of the cap 27 capped with the body 22. In addition, the first vision inspection device 500 may control the first display device 650 so that the first image captured by the first camera 530 is displayed on the first display device 650, and the second vision inspection device 600 may control the first display device 650 so that the second image captured by the second camera 630 is displayed on the first display device 650. For example, the first image may be positioned on a left side of the first display device 650, and the second image may be positioned on a right side of the first display device 650.

In exemplary embodiments, when the upper surface of the solution 30 is positioned within a range of a predetermined height of the tube 10, the first vision inspection device 500 may detect the upper surface of the solution 30 from the first image. When the first vision inspection device 500 detects the upper surface of the solution 30 from the first image, the first vision inspection device 500 may display the upper surface as an area image a1 on the first display device 650. In this case, the first vision inspection device 500 may determine that a dispensing defect of the captured tube 10 does not occur.

Otherwise, when the upper surface of the solution 30 is relatively lower than the range of the predetermined height of the tube 10, the first vision inspection device 500 may not detect the upper surface of the solution 30 from the first image. For example, when the solution 30 is not dispensed into the body 22, or when the solution 30 is relatively insufficiently dispensed into the body 22, the upper surface of the solution 30 may not be displayed in the first image. In this case, the first vision inspection device 500 may determine that the dispensing defect of the captured tube 10 occurs, and the first vision inspection device 500 may provide an information on the tube 10 determined as the dispensing defect (e.g., a position information of the tube 10 determined as the dispensing defect among the tubes 10 inserted into the first to eighth grooves 111, 112, 113, 114, 115, 116, 117, and 118 of the tube holding plate 110) to the controller 2000. In addition, when the upper surface of the solution 30 is relatively higher than the range of the predetermined height of the tube 10, the first vision inspection device 500 may not detect the upper surface of the solution 30 from the first image. For example, when the solution 30 is over-dispensed into the body 22, the upper surface of the solution 30 may be displayed relatively high in the first image. In this case, the first vision inspection device 500 may determine that a dispensing defect of the captured tube 10 occurs, and the first vision inspection device 500 may provide an information on the tube 10 determined as the dispensing defect to the controller 2000. That is, the first vision inspection device 500 may determine that the dispensing defect of the captured tube 10 does not occur only when the height of the upper surface of the solution 30 from the first image is within the range of the predetermined height of the tube 10, and may determine that the dispensing defect of the captured tube 10 occurs when the height of the upper surface of the solution 30 from the first image is outside the range of the predetermined height of the tube 10.

In exemplary embodiments, the second vision inspection device 600 may detect a first length from the upper surface of the cap 27 to the protrusion 25 and a second length from a lower surface of the cap 27 to the protrusion 25 from the second image, and the second vision inspection device 600 may determine whether the capping defect of the captured tube 10 based on the first length and the second length occurs. When the first length and the second length are within the predetermined range, the second vision inspection device 600 may determine that the capping defect of the captured tube 10 does not occur.

Otherwise, when the first length and the second length are not within the predetermined range, the second vision inspection device 600 may determine that the capping defect of the captured tube 10 occurs. For example, due to a defect in threads of the body 22, a defect in threads of the cap 27, a defect of the capping device 400, and the like, the cap 27 may be capped with the body 22 so that the upper surface of the cap 27 is inclined. In this case, since the solution 30 contained in the body 22 leaks to an outside, the second vision inspection device 600 may determine that the capping defect of the captured tube 10 occurs, and the second vision inspection device 600 may provide an information on the tube 10 determined as the capping defect (e.g., a position information of the tube 10 determined as the capping defect among the tubes 10 inserted into the first to eighth grooves 111, 112, 113, 114, 115, 116, 117, and 118 of the tube holding plate 110) to the controller 2000.

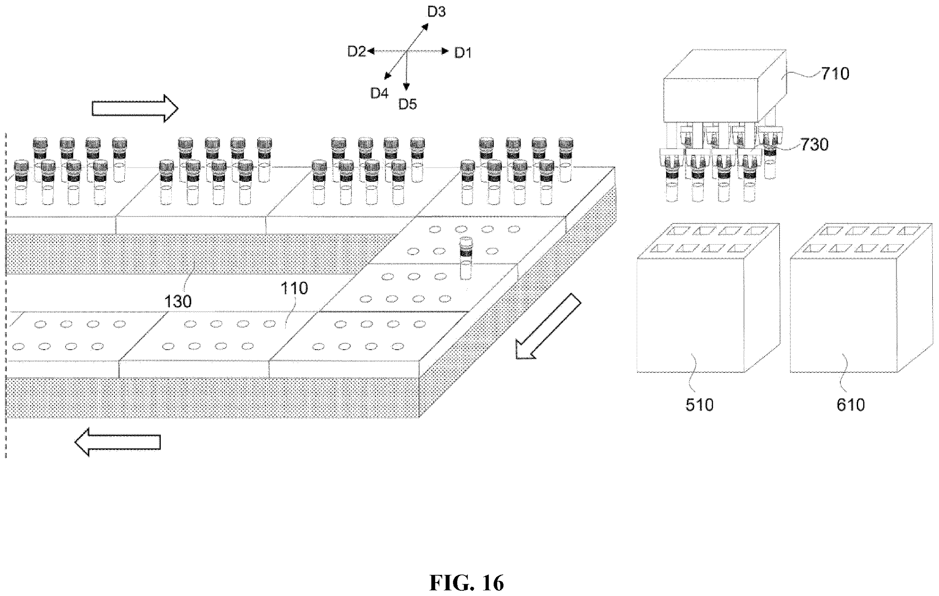

Alternatively, when the second vision inspection device 600 detects an absence of the cap 27 from the body 22, the second vision inspection device 600 may provide an information on the body 22 without the cap 27 to the controller 2000. For example, in a process of providing the cap 27 to the body 22, the cap 27 may be lost, or in a process of capping the cap 27 to the body 22, the cap 27 may be lost. In this case, as illustrated in FIG. 16, the controller 2000 may control the transferring device 700 so that the transferring device 700 does not transfer the body 22 without the cap 27. The body 22 without the cap 27 may be moved through the tube holding plate 110, and may be collected by the operator of the automated production system 1000 or another transferring device.

However, although the first vision inspection device 500 of the present invention has been described as including one first camera 530 and the second vision inspection device 600 of the present invention has been described as including one second camera 630, the configuration of the present invention is not limited thereto. For example, in other exemplary embodiments, the first vision inspection device 500 may include two first cameras 530, and the second vision inspection device 600 may include two second cameras 630. In this case, one pair of the first and second cameras 530 and 630 may capture the tubes 10 inserted into the first to fourth grooves 111, 112, 113, and 114 of the tube holding plate 110, and the other pair of the first and second cameras 530 and 630 may capture the tubes 10 inserted into the fifth to eighth grooves 115, 116, 117, and 118.

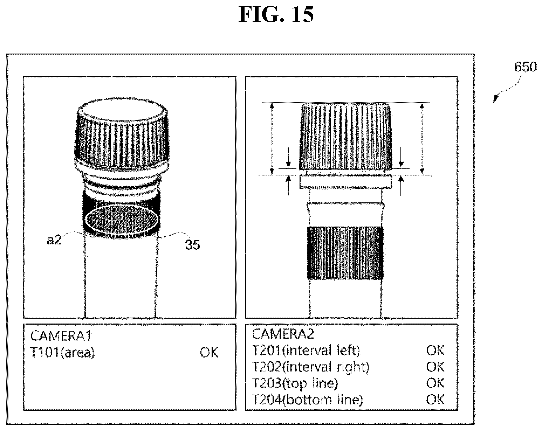

In other exemplary embodiments, as illustrated in FIG. 15, the tube 10 may further include a concave-convex portion 35. For example, when a user using the tube 10 opens the cap 27 of the tube 10 to use the solution 30, the concave-convex portion 35 may increase a friction between the user's hand and the body 22 so that the user readily rotates the cap 27 from the body 22. Depending on a type of the solutions 30, a solution 30 that needs to be dispensed in a relatively large amount may be dispensed into the body 22. In this case, an upper surface of the solution 30 dispensed in the relatively large amount may overlap with the concave-convex portion 35. In other words, the range of the predetermined height of the tube 10 for determining that the dispensing defect of the tube 10 does not occur may overlap with the concave-convex portion 35.

In a conventional first vision inspection device, the conventional first camera may be positioned parallel to the upper surface of the solution, and because the upper surface of the solution is not visible, the conventional first camera captured an outer line of the upper surface of the solution. When the height of the solution is overlapped with the concave-convex portion of the tube, the line of the upper surface may not be accurately captured due to the concave-convex portion, and the conventional first vision inspection device may not accurately recognize the line from the captured image, so the conventional first vision inspection device may not accurately determine whether the dispensing defect of the solution occurs.

However, although the upper surface of the solution 30, which is to be dispensed in a relatively large amount depending on the type of solutions 30, is overlapped with the concave-convex portion 35, the first camera 530 of the present invention may be tilted at a predetermined angle (θ) from the upper surface of the solution 30 to capture the area of the upper surface of the solution 30 contained in the body 22, and because recognizing the area of the upper surface is relatively readily than recognizing the line of the upper surface, the first vision inspection device 500 may relatively readily recognize the area of the upper surface from the image of the upper surface of the solution 30 that is overlapped with the concave-convex portion 35. Accordingly, the first vision inspection device 500 may display the upper surface as the area image (a2) on the first display device 650.

Referring to FIGS. 1, 2, 16, and 17, the transferring device 700 may be positioned between the first and second vision inspection devices 500 and 600 and the first and second defect product boxes 510 and 610. The transferring device 700 may include a transferring unit 710, and the transferring unit 710 may include transferring grippers 730. Here, the transferring grippers 730 may include first through eighth transferring grippers.

For example, the transferring unit 710 may be connected to a robot arm capable of moving in the up-down directions, the left-right directions, and the front-rear directions. After the first and second vision inspection devices 500, 600 perform a process of inspecting whether the dispensing defect of the solution 30 occurs and whether the capping defect of the cap 27 occurs, the tube holding plate 110 may be moved in a first direction D1, and the transferring unit 710 may grip each of the tubes 10 included in the one grouped tubes 10 inserted into the tube holding plate 110 through the transferring grippers 730 and move the tubes 10 included in one grouped tubes 10. In exemplary embodiments, the first transferring gripper may grip the tube 10 inserted into the first groove 111 of the tube holding plate 110, and the second transferring gripper may grip the tube 10 inserted into the second groove 112 of the tube holding plate 110. The third transferring gripper may grip the tube 10 inserted into the third groove 113 of the tube holding plate 110, and the fourth transferring gripper may grip the tube 10 inserted into the fourth groove 114 of the tube holding plate 110. The fifth transferring gripper may grip the tube 10 inserted into the fifth groove 115 of the tube holding plate 110, and the sixth transferring gripper may grip the tube 10 inserted into the sixth groove 116 of the tube holding plate 110. The seventh transferring gripper may grip the tube 10 inserted into the seventh groove 117 of the tube holding plate 110, and the eighth transferring gripper may grip the tube 10 inserted into the eighth groove 118 of the tube holding plate 110. In addition, each of the first through eighth transferring grippers may simultaneously grip the tubes 10 inserted into the first through eighth grooves 111, 112, 113, 114, 115, 116, 117, and 118, respectively.

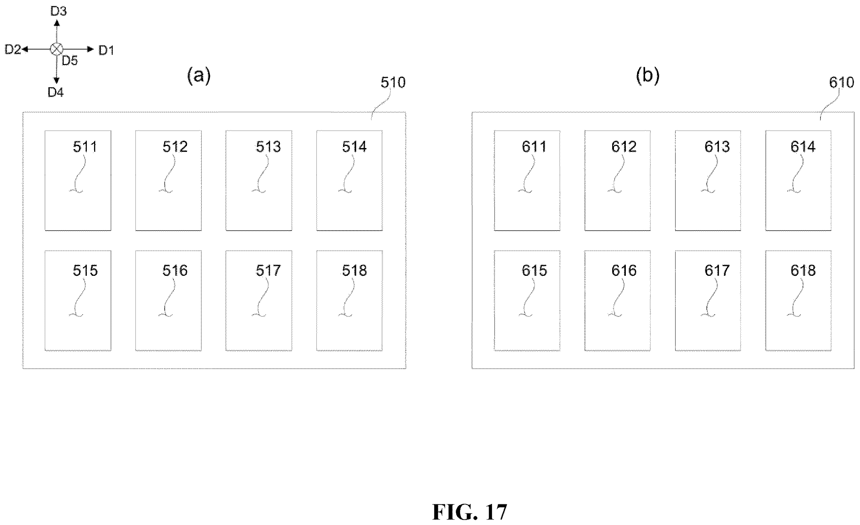

The first defect product box 510 may be positioned adjacent to the first conveyor 130. As illustrated in FIG. 17, the first defect product box 510 may include first through eighth dispensing defect spaces 511, 512, 513, 514, 515, 516, 517, and 518. In other words, the first defect product box 510 may include the number of the dispensing defect spaces equal to the number of the tubes 10 included in one grouped tubes 10 inspected from the first vision inspection device 500 or equal to the number of the dispensing units. That is, the tube 10 inserted into the first groove 111 of the tube holding plate 110 may correspond to the first dispensing defect space 511, and the tube 10 inserted into the second groove 112 of the tube holding plate 110 may correspond to the second dispensing defect space 512. The tube 10 inserted into the third groove 113 of the tube holding plate 110 may correspond to the third dispensing defect space 513, and the tube 10 inserted into the fourth groove 114 of the tube holding plate 110 may correspond to the fourth dispensing defect space 514. The tube 10 inserted into the fifth groove 115 of the tube holding plate 110 may correspond to the fifth dispensing defect space 515, and the tube 10 inserted into the sixth groove 116 of the tube holding plate 110 may correspond to the sixth dispensing defect space 516. The tube 10 inserted into the seventh groove 117 of the tube holding plate 110 may correspond to the seventh dispensing defect space 517, and the tube 10 inserted into the eighth groove 118 of the tube holding plate 110 may correspond to the eighth dispensing defect space 518.

The second defect product box 610 may be positioned adjacent to the first second defect product box 510. As illustrated in FIG. 17, the second defect product box 610 may include first through eighth capping defect spaces 611, 612, 613, 614, 615, 616, 617, and 618. In other words, the second defect product box 610 may include the number of the capping defect spaces equal to the number of the tubes 10 included in one grouped tubes 10 inspected from the second vision inspection device 600 (or the number of the dispensing units) or greater than the number of the capping units (e.g., twice of the number of the capping units). That is, the tube 10 inserted into the first groove 111 of the tube holding plate 110 may correspond to the capping defect space 611, and the tube 10 inserted into the second groove 112 of the tube holding plate 110 may correspond to the second capping defect space 612. The tube 10 inserted into the third groove 113 of the tube holding plate 110 may correspond to the third capping defect space 613, and the tube 10 inserted into the fourth groove 114 of the tube holding plate 110 may correspond to the fourth capping defect space 614. The tube 10 inserted into the fifth groove 115 of the tube holding plate 110 may correspond to the fifth capping defect space 615, and the tube 10 inserted into the sixth groove 116 of the tube holding plate 110 may correspond to the sixth capping defect space 616. The tube 10 inserted into the seventh groove 117 of the tube holding plate 110 may correspond to the seventh capping defect space 617, and the tube 10 inserted into the eighth groove 118 of the tube holding plate 110 may correspond to the eighth capping defect space 618.

For example, a dispensing defect tube 10 among the tubes 10 included in one grouped tubes 10 inspected from the first vision inspection device 500 may be released to a predetermined dispensing defect space among the dispensing defect spaces. In other words, after the transferring device 700 grips the tubes 10 included in one grouped tubes 10 and is positioned on the first defect product box 510, the transferring device 700 may release the dispensing defect tube 10 so that the dispensing defect tube 10 is stored in the dispensing defect space corresponding to the dispensing defect tube 10. In exemplary embodiments, when the first vision inspection device 500 determines that the tube 10 inserted into the fourth groove 114 of the tube holding plate 110 among the tubes 10 included in one grouped tubes 10 is a dispensing defect tube 10, the transferring device 700 may space apart a fourth transfer gripper gripping the tube 10 inserted into the fourth groove 114 of the tube holding plate 110 from the tube 10, and the tube 10 may be released to the fourth dispensing defect space 514.

In exemplary embodiments, during the dispensing defect inspection process, the dispensing defect tube 10 may be stored in the predetermined dispensing defect space of the first defect product box 510, and the operator using the automated production system 1000 may count the number of dispensing defect tube 10 stored in the dispensing defect space of the first defect product box 510 to predict a failure of the dispensing unit. For example, when a relatively large number of dispensing defect tubes 10 are stored in the fourth dispensing defect space 514, the operator may predict a failure of the fourth dispensing unit 280. In addition, when a relatively large number of dispensing defect tubes 10 are stored in the fifth dispensing defect space 515, the operator may predict a failure of the fifth dispensing unit 255. In other words, since the eight dispensing units correspond to the eight dispensing defect spaces, each of the first to eighth dispensing defect spaces 511, 512, 513, 514, 515, 516, 517, 518 may correspond to a failure of each of the first to eighth dispensing units 250, 260, 270, 280, 255, 265, 275, 285.

In addition, a capping defect tube 10 among the tubes 10 included in one grouped tubes 10 inspected from the second vision inspection device 600 may be released to a predetermined capping defect space among the capping defect spaces. In other words, after the transferring device 700 positioned on first defect product box 510 is moved on the second defect product box 610, the transferring device 700 may release the capping defect tube 10 so that the capping defect tube 10 is stored in the capping defect space corresponding to the capping defect tube. In exemplary embodiments, when the second vision inspection device 600 determines that the tube 10 inserted into the fifth groove 115 of the tube holding plate 110 among the tubes 10 included in one grouped tubes 10 is a capping defect tube 10, the transferring device 700 may space apart a fifth transfer gripper gripping the tube 10 inserted into the fifth groove 115 of the tube holding plate 110 from the tube 10, and the tube 10 may be released to the fifth dispensing defect space 515.

In exemplary embodiments, during the capping defect inspection process, the capping defect tube 10 may be stored in the predetermined capping defect space of the second defect product box 610, and the operator may count the number of capping defect tube 10 stored in the capping defect space of the second defect product box 610 to predict a failure of the capping unit. For example, when a relatively large number of capping defect tubes 10 are stored in the fifth capping defect space 615, the operator may predict a failure of the third capping unit 415. In addition, when a relatively large number of capping defect tubes 10 are stored in the sixth capping defect space 616, the operator may predict a failure of the third capping unit 415. In other words, since the four capping units correspond to the eight capping defect spaces, the first and second capping defect spaces 611 and 612 may correspond to a failure of the first capping unit 410, and the third and fourth capping defect spaces 613 and 614 may correspond to a failure of the second capping unit 460. The fifth and sixth capping defect spaces 615 and 616 may correspond to a failure of the third capping unit 415, and the seventh and eighth capping defect spaces 617 and 618 may correspond to a failure of the fourth capping unit 465.

In exemplary embodiments, the controller 2000 may control the transfer device 700 so that a dispensing defect tube 10 among the tubes 10 included in one grouped tubes 10 inspected from the first vision inspection device 500 is released to a predetermined dispensing defect space among the dispensing defect spaces. In addition, the controller 2000 may control the transfer device 700 so that a capping defect tube 10 among the tubes 10 included in one grouped tubes 10 inspected from the second vision inspection device 600 is released to a predetermined capping defect space among the capping defect spaces.

In other words, the tubes 10 included in one grouped tubes 10 may include first to n-th tubes 10 (where n is an integer of 4 or more), and the dispensing units of the dispensing device 200 may include first to n-th dispensing units. The first defect product box 510 may include first to n-th dispensing defect spaces. That is, the number of the tubes 10 included in the one grouped tubes 10 (or bodies 22) may be equal to the number of the dispensing units and the number of the dispensing defect spaces. When the first vision inspection device 500 detects a dispensing defect of a k-th tube 10 among the first to n-th tubes 10, where k is an integer between 1 and n, the controller 2000 may control the transfer device 700 so that the k-th tube 10 is released to a k-th dispensing defect space among the first to n-th dispensing defect spaces. After the kth tube 10 is released to the k-th dispensing defect space, the transfer device 700 may provide remaining tubes 10 except for the k-th tube 10 among the first to n-th tubes 10 (e.g., the first to (k-1)th tubes 10 and the (k+1)th to n-th tubes 10) to an external feeding device (e.g., the second feeding device 170).

In addition, the tubes 10 included in one grouped tubes 10 may include first to n-th tubes 10, and the capping units of the capping device 400 may include first to (n/2)th capping units. The second defect product box 610 may include first to n-th capping defect spaces. That is, the number of the tubes 10 included in the one grouped tubes 10 (or bodies 22) may be equal to the number of the capping defect spaces, and the number of the capping defect spaces may be greater than the number of the capping units. When the second vision inspection device 600 detects a capping defect of a j-th tube 10 among the first to n-th tubes 10, where j is an integer between 1 and n, the controller 2000 may control the transfer device 700 so that the j-th tube 10 is released to a j-th capping defect space among the first to n-th capping defect spaces. After the j-th tube 10 is released to the j-th capping defect space, the transfer device 700 may provide remaining tubes 10 except for the j-th tube 10 among the first to n-th tubes 10 (e.g., the first to (j-1)th tubes 10 and the (j+1)th to n-th tubes 10) to an external feeding device (e.g., the second feeding device 170).

Alternatively, when the first vision inspection device 500 detects a dispensing defect of a k-th tube 10 among the first to n-th tubes 10 and the second vision inspection device 600 detects a capping defect of the k-th tube 10, the controller 2000 may control the transfer device 700 so that the k-th tube 10 is released to the k-th dispensing defect space among the first to n-th dispensing defect spaces. Otherwise, when the first vision inspection device 500 detects a dispensing defect of a k-th tube 10 among the first to n-th tubes 10 and the second vision inspection device 600 detects a capping defect of the k-th tube 10, the controller 2000 may control the transfer device 700 so that the k-th tube 10 is released to the k-th capping defect space among the first to n-th capping defect spaces. In other words, when both the dispensing defect and the capping defect are substantially detected in one tube 10, the controller 2000 may store the tube 10 in the first defect product box 510 or the second defect product box 610 according to a setting of the operator using the automated production system 1000.

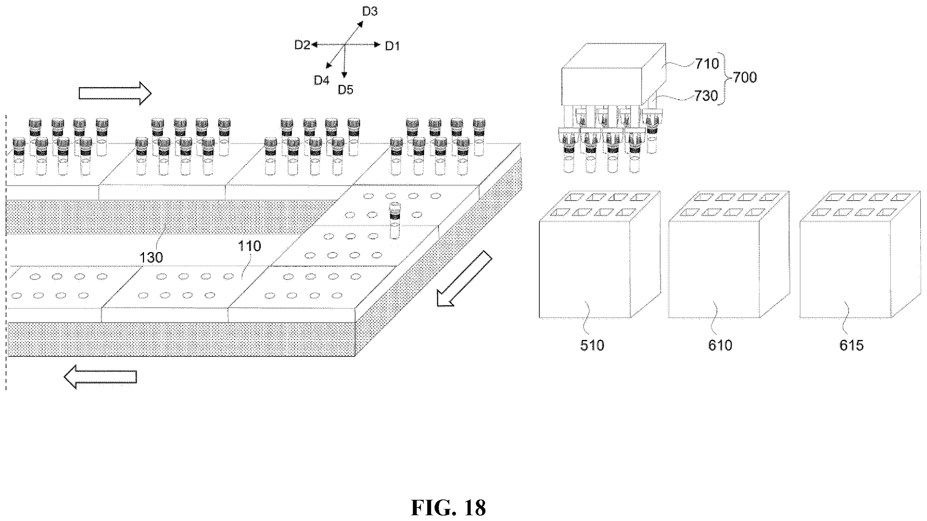

In another exemplary embodiment, as illustrated in FIG. 18, the automated production system 1000 may further include an additional defect product box 615. The additional defect product box 615 may include first to n-th defect spaces. When the first vision inspection device 500 detects a dispensing defect of a k-th tube 10 among the first to n-th tubes 10 and the second vision inspection device 600 detects a capping defect of the k-th tube 10, the controller 2000 may control the transfer device 700 so that the k-th tube 10 is released to the k-th defect space among the first to n-th defect spaces of the additional defect product box 615. In other words, when both the dispensing defect and the capping substantially defect are detected in one tube 10, the controller 2000 may store the tube 10 in the additional defect product box 615.

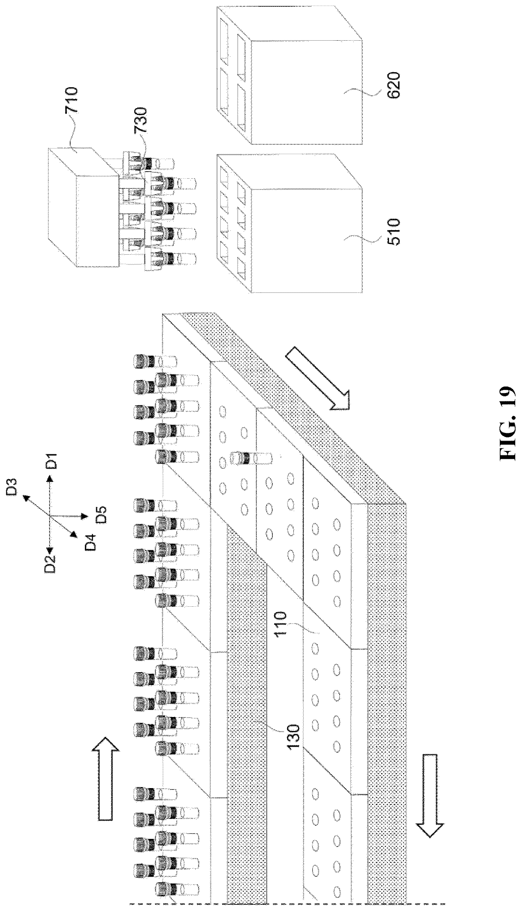

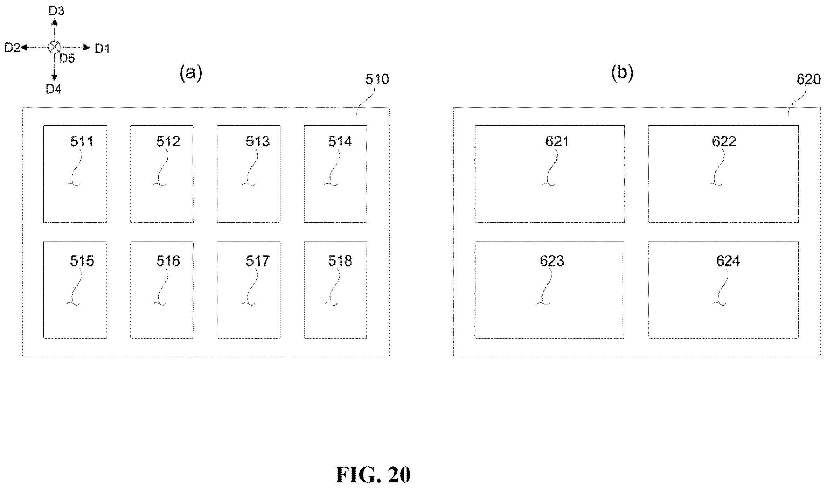

In still another exemplary embodiment, as illustrated in FIGS. 19 and 20, the second defect product box 620 may be positioned adjacent to the first defect product box 510. The second defect product box 620 may include first to fourth capping defect spaces 611, 612, 613, and 614. In other words, the second defect product box 620 may include the same number of capping defect spaces as the number of capping units. In other words, the second defect product box 620 may include the number of capping defect spaces corresponding to one-half of the number of the tubes 10 included in one grouped tubes 10 inspected from the second vision inspection device 600. That is, the tube 10 inserted into the first groove 111 of the tube holding plate 110 may correspond to the first capping defect space 621, and the tube 10 inserted into the second groove 112 of the tube holding plate 110 may correspond to the first capping defect space 621. The tube 10 inserted into the third groove 113 of the tube holding plate 110 may correspond to the second capping defect space 622, and the tube 10 inserted into the fourth groove 114 of the tube holding plate 110 may correspond to the second capping defect space 622. The tube 10 inserted into the fifth groove 115 of the tube holding plate 110 may correspond to the third capping defect space 623, and the tube 10 inserted into the sixth groove 116 of the tube holding plate 110 may correspond to the third capping defect space 623. The tube 10 inserted into the seventh groove 117 of the tube holding plate 110 may correspond to the fourth capping defect space 624, and the tube 10 inserted into the eighth groove 118 of the tube holding plate 110 may correspond to the fourth capping defect space 624.

In addition, a capping defect tube 10 among one grouped tubes 10 inspected from the second vision inspection device 600 may be released to a predetermined capping defect space among the capping defect spaces. In other words, after the transfer device 700 positioned on the first defect product box 510 is moved on the second defect product box 620, the transfer device 700 may release the capping defect tube 10 so that the capping defect tube 10 is stored in the capping defect space corresponding to the capping defect tube. When the second vision inspection device 600 determines that a tube 10 inserted into the fifth groove 115 of the tube holding plate 110 among the tubes 10 included in one grouped tubes 10 is the capping defect tube 10, the transfer device 700 may space apart a fifth transfer gripper gripping the tube 10 inserted into the fifth groove 115 of the tube holding plate 110 from the tube 10, and the tube 10 may be released to the third capping defect space 623.

Further, during the capping defect inspection process, the capping defect tube 10 may be stored in a predetermined capping defect space of the second defect product box 620, and the operator may count the number of capping defect tubes 10 stored in the capping defect space of the second defect product box 620 to predict a failure of a capping unit. For example, when a relatively large number of capping defect tubes 10 are stored in the third capping defect space 623, the operator may predict a failure of the third capping unit 415. In addition, when a relatively large number of capping defect tubes 10 are stored in the fourth capping defect space 624, the operator may predict a failure of the fourth capping unit 465. In other words, since the four capping units correspond to the four capping defect spaces, the first capping defect space 621 may correspond to a failure of the first capping unit 410, and the second capping defect space 622 may correspond to a failure of the second capping unit 460. The third capping defect space 623 may correspond to a failure of the third capping unit 415, and the fourth capping defect space 624 may correspond to a failure of the fourth capping unit 465.

For example, the tubes 10 included in one grouped tubes 10 may include first to n-th tubes 10, where n is an integer of 4 or more, and the capping units of the capping device 400 may include first to (n/2)th capping units. The second defect product box 610 may include first to (n/2)th capping defect spaces. That is, the number of the tubes 10 includes in the one grouped tubes 10 (or bodies 22) may be greater than the number of the capping defect spaces, and the number of the capping defect spaces may be the same as the number of the capping units.

As the automated production system 1000 according to exemplary embodiments of the present invention includes the controller 2000, the transferring unit 710, the first vision inspection device 500, the second vision inspection device 600, the first defect product box 510, and the second defect product box 610, the controller 2000 that receives a position information of the tube 10, where a defect has occurred, from the first and second vision inspection devices 500 and 600 may control the transferring unit 710 so that the defect tube 10 is released to a predetermined space of the first and second defect product boxes 510 and 610, and the operator using the automated production system 1000 may predict the cause of the defect tube 10 and check the type of the defects. For example, the operator may count the number of dispensing defect tubes 10 stored in the first defect product box 510 to predict a dispensing unit, which is failed (or defective, malfunctioning, etc.), among the dispensing units of the dispensing device 200, and may check the dispensing defect tubes 10 to check the type of the defects (for example, the dispensing amount of the solution 30 dispensed in the body 22). In addition, the operator may count the number of capping defect tubes 10 stored in the second defect product box 610 to predict a capping unit, which is failed, among the capping units of the capping device 400, and may check the capping defect tubes 10 to check the type of the defects (e.g., a capping state of the cap 27). Accordingly, the operator using the automated production system 1000 may accurately predict the failed unit among the dispensing units or the capping units, and the failed unit may be relatively quickly repaired or replaced to relatively reduce a supply error rate by checking the type of the defects.

In addition, since a tube 10, where a dispensing defect has occurred, is stored in the dispensing defect space of the first defect product box 510 and a tube 10, where a capping defect has occurred, is stored in the capping defect space of the second defect product box 610, the tube 10, where the defect has occurred, may be isolated in the first and second defect product boxes 510 and 610, and the tube 10, where the defect has occurred, may not be fed to the second feeding device 170. Accordingly, outflow of the tube 10, where the defect has occurred, may be prevented.

Referring to FIGS. 1, 3, and 21, the second feeding device 170 may include rollers 180, a second conveyor 190, etc.

The second conveyor 190 may extend in the first direction D1 and the second direction D2, and the second conveyor 190 may move the rollers 180 in the first direction D1.

A plurality of rollers 180 may be disposed on the second conveyor 190. The tube 10 provided from the transferring device 700 may be provided between two adjacent rollers 180 among the rollers 180. In other words, the rollers 180 of the second feeding device 170 may sequentially feed the tubes 10. Each of the rollers 180 may be rotatable clockwise or counterclockwise with respect to a central axis. The roller 180 may be manufactured using plastic.

The first labeling device 800 may attach a first label 850 to the cap 27 of each of the tubes 10. The first labeling device 800 may include a first printer 810, a first attaching unit 830, etc. A plurality of first labels 850 attached to a release paper (or a separating paper) may be provided to the first printer 810. For example, the first label 850 may be transparent or opaque, and may include a printing surface, where a text is printed, and an adhesive surface that is adhered to an upper surface of the cap 27. Here, before the first label 850 is attached to the upper surface of the cap 27, the adhesive surface of the first label 850 may be attached to the release paper. In addition, a size of the first label 850 may be smaller than the upper surface of the cap 27, and may have a circular planar shape.

The first printer 810 may print the text on the printing surface of the first label 850. Here, the text may include letters, numbers, symbols, etc.

After the first attaching unit 830 may separate the printed first label 850 from the release paper, the first attaching unit 830 may attach the printed first label 850 to the upper surface of the cap 27. For example, the first attaching unit 830 may include a suction part capable of sucking air, and after the first attaching unit 830 is positioned on the printing surface of the printed first label 850, the first attaching unit 830 may suck air through the suction part to separate the printed first label 850 from the release paper. After the first attaching unit 830 together with the printed first label 850 moves on the upper surface of the cap 27, the first attaching unit 830 may bring the adhesive surface of the first label 850 into contact with the upper surface of the cap 27.

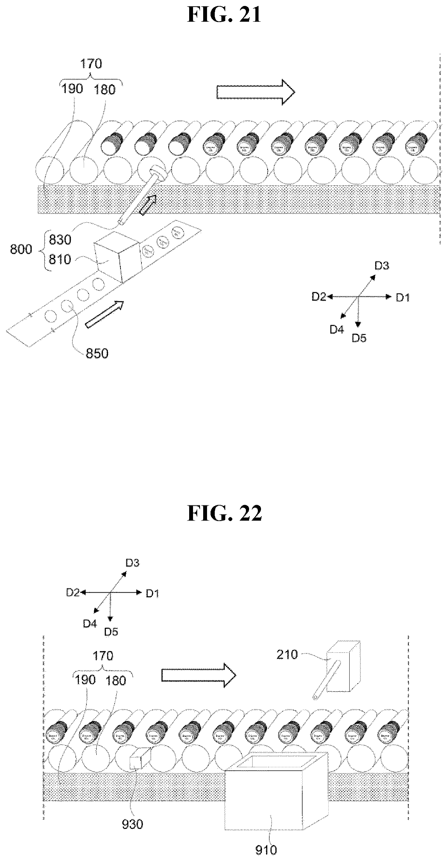

Referring to FIGS. 1, 3, 22, and 23, the third vision inspection device 900 may inspect whether a defect of the first label 850 attached to the cap 27 of the tube 10 that is positioned between two adjacent rollers 180 occurs. The third vision inspection device 900 may include a third camera 930. As illustrated in FIG. 22, the third camera 930 may be positioned to face the cap 27 so as to capture the text printed on the first label 850 that is attached to the upper surface of the cap 27 of the tube 10 and a position of the first label 850 attached to the cap 27.

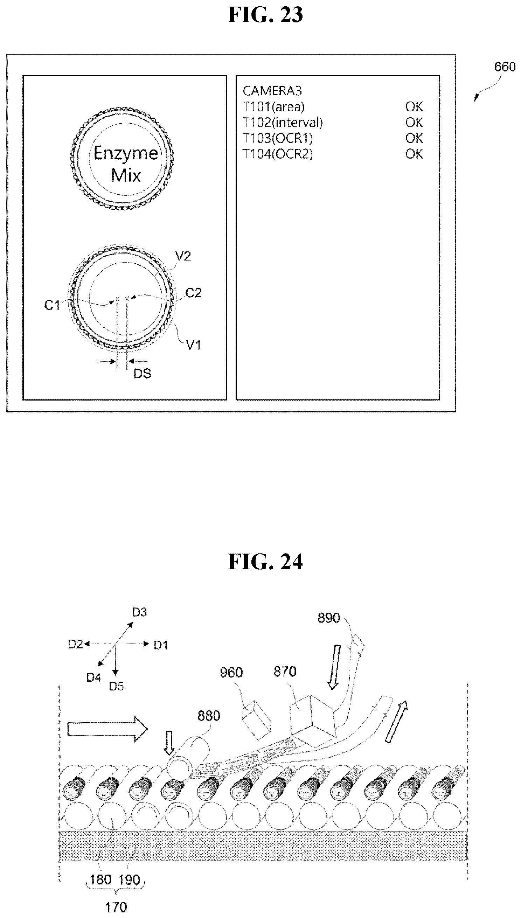

As illustrated in FIG. 23, the second display device 660 may display a third image captured by the third camera 930. In other words, the second display device 660 may display the text printed on the first label 850 that is attached to the upper surface of the cap 27 and the position of the first label 850 attached to the upper surface of the cap 27.

For example, after the first labeling device 800 performs a process of attaching the first label 850 to the cap 27, the rollers 180 may be moved in the first direction D1. When the tube 10, where the first label 850 is attached, is positioned in front of the fixed third camera 930, the third camera 930 may capture the first label 850 attached to the cap 27 of the tube 10.

In exemplary embodiments, the third vision inspection device 900 may control the third camera 930 so that the third camera 930 captures the first label 850 attached to the cap 27, and the third vision inspection device 900 may control the second display device 660 so that the third image captured by the third camera 930 is displayed on the second display device 660.

In exemplary embodiments, the third vision inspection device 900 may detect the text printed on the first label 850 from the third image. When the third vision inspection device 900 detects the text printed on the first label 850, the third vision inspection device 900 may determine that a printing defect of the first label 850 in the captured tube 10 does not occur.

Otherwise, when the third vision inspection device 900 does not detect the text printed on the first label 850 from the third image, the third vision inspection device 900 may determine that the printing defect of the first label 850 occurs in the captured tube 10, and the third vision inspection device 900 may provide an information (e.g., a position information of the tube 10) of the tube 10 determined as the printing defect to the controller 2000.

In exemplary embodiments, the third vision inspection device 900 may detect an outer line V1 of the cap 27, a first midpoint C1 of the outer line V1, an outer line V2 of the first label 850, a second midpoint C2 of the outer line V2, and a distance DS between the first midpoint C1 and the second midpoint C2 from the third image, and the third vision inspection device 900 may determine whether a position defect of the first label 850 in the captured tube 10 occurs based on the distance DS. When the distance DS is within a predetermined range, the third vision inspection device 900 may determine that the position defect of the first label 850 in the captured tube 10 does not occur.

Otherwise, when the distance DS is not within the predetermined range, the third vision inspection device 900 may determine that the position defect of the first label 850 occurs in the captured tube 10. For example, when the first attaching unit 830 attaches a part of the first label 850 so as not to overlap with the upper surface of the cap 27, the first label 850 may be separated from the upper surface of the cap 27. In this case, since the first label 850 may be lost, when the distance DS is relatively large, the third vision inspection device 900 may determine that the position defect of the first label 850 occurs in the captured tube 10, and the third vision inspection device 900 may provide an information (e.g., a position information of the tube 10) of the tube 10 determined as the position defect to the controller 2000.

The third defect product box 910 may be positioned adjacent to the second feeding device 170. As illustrated in FIG. 22, the third defect product box 910 may include an empty space. A first label defect tube 10 among the tubes 10 inspected from the third vision inspection device 900 may be released into the empty space of the third defect product box 910.

The first removing member 210 may be positioned adjacent to the third defect product box 910. In other words, the first removing member 210 and the third defect product box 910 may face each other. The first removing member 210 may remove the tube 10 positioned in the second feeding device 170 from the second feeding device 170. For example, the first removing member 210 may include an air blower that removes the tube 10 positioned in the second feeding device 170 by using air. The removed tube 10 from the second feeding device 170 may be released into the empty space of the third defect product box 910.

In exemplary embodiments, the controller 2000 may control the first removing member 210 so that a tube 10, where the text printed on the first label 850 attached to the cap 27 among the tubes 10 inspected from the third vision inspection device 900 is defective, and/or a tube 10, where the position of the first label 850 attached to the cap 27 among the tubes 10 inspected from the third vision inspection device 900 is defective, is released into the third defect product box 910.

In exemplary embodiments, while an inspection of whether a defect of the first label 850 occurs is performed, a first label defect tube 10 may be stored in the third defect product box 910, and the operator using the automated production system 1000 may count the number of tubes 10 stored in the third defect product box 910 and check a shape of the first label 850 attached to the cap 27 of the tubes 10 stored in the third defect product box 910 to predict a failure of the first labeling device 800. For example, when the number of tubes 10 stored in the third defect product box 910 is greater than or equal to a predetermined number, the operator may predict that a failure of the first labeling device 800 occurs. In addition, when there is a relatively large amount of a defect of the text printed on the first label 850 by checking the shape of the first label 850 attached to the cap 27 of the tubes 10 stored in the third defect product box 910, the operator may predict that a failure of the first printer 810 occurs. Further, when there is a relatively large amount of a position defect of the first label 850 by checking the shape of the first label 850 attached to the cap 27 of the tube 10 stored in the third defect product box 910, the operator may predict that a failure of the first attaching unit 830 occurs.

Referring to FIGS. 1, 3, 24, and 25, the second labeling device 860 may attach a second label 890 to the body 22 of each of the tubes 10. The second labeling device 860 may include a second printer 870, a second attaching unit 880, etc. A plurality of second labels 890 attached to a release paper may be provided to the second printer 870. For example, the second label 890 may be transparent or opaque, and the second label 890 may include a printing surface, where a text is printed, and an adhesive surface that is adhered to a side surface of the body 22. Here, before the second label 890 is attached to the side surface of the body 22, the adhesive surface of the second label 890 may be attached to the release paper. In addition, a size of the second label 890 may cover the side surface of the body 22, and may have a rectangular planar shape.

The second printer 870 may print the text on the printing surface of the second label 890. For example, the number of texts printed on the second label 890 may be relatively greater than the number of texts printed on the first label 850.

The fourth vision inspection device 950 may inspect whether a defect of the text printed on the second label 890 to be attached to the side surface of the body 22 occurs. The fourth vision inspection device 950 may include a fourth camera 960. As illustrated in FIG. 24, the fourth camera 960 may be positioned to face the printing surface of the printed second label 890 between the second printer 870 and the second attaching unit 880 to capture the text printed on the second label 890.

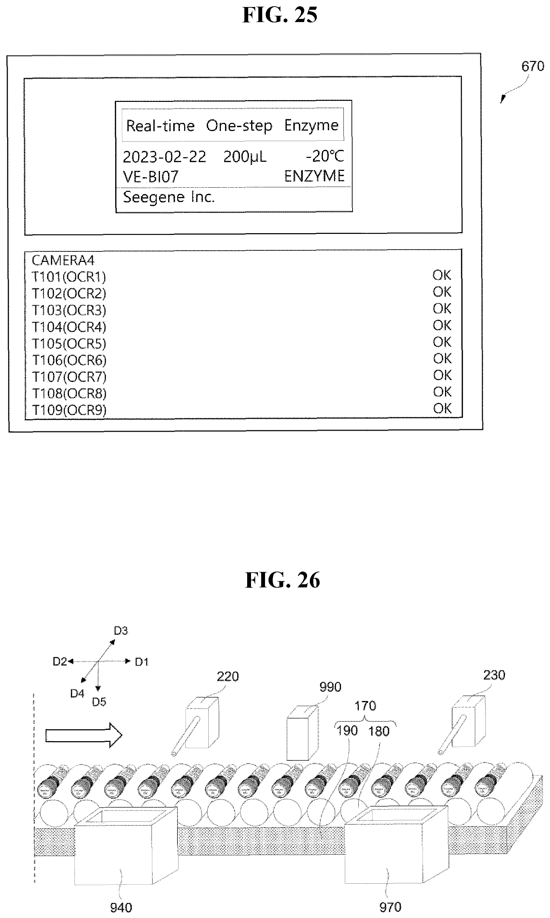

As illustrated in FIG. 25, the third display device 670 may display a fourth image captured by the fourth camera 960. In other words, the third display device 670 may display the text printed on the second label 890 from the second printer 870.

For example, after the text is printed on the printing surface of the second label 890 from the second printer 870, the second label 890 may be moved in a direction from the second printer 870 toward the second attaching unit 880. When the second label 890, where the text is printed on the printing surface, is positioned in front of the fixed fourth camera 960, the fourth camera 960 may capture the second label 890.

In exemplary embodiments, the fourth vision inspection device 950 may control the fourth camera 960 so that the fourth camera 960 captures the second label 890, and the fourth vision inspection device 950 may control the third display device 670 so that the fourth image captured from the fourth camera 960 is displayed on the third display device 670.

In exemplary embodiments, the fourth vision inspection device 950 may detect the text printed on the second label 890 from the fourth image. When the fourth vision inspection device 950 detects the text printed on the second label 890, the fourth vision inspection device 950 may determine that a printing defect does not occur in the captured second label 890.

Otherwise, when the fourth vision inspection device 950 does not detect the text printed on the second label 890 from the fourth image, the fourth vision inspection device 950 may determine that there is the printing defect occurs in the captured second label 890, and the fourth vision inspection device 950 may provide an information (e.g., a position information of the second label 890) of the second label 890 determined as the printing defect to the controller 2000.

The second attaching unit 880 may be positioned adjacent to a side surface of the body 22 of the tube 10 positioned between two adjacent rollers 180. In other words, the printed second label 890 may be positioned between the tube 10 positioned between the two adjacent rollers 180 and the second attaching unit 880. The second attaching unit 880 may have a cylindrical shape similar to a shape of the roller 180. The second attaching unit 880 may attach the printed second label 890 to the side surface of the body 22 of the tube 10 positioned between the two adjacent rollers 180. For example, after the second label 890 is positioned on the side surface of the body 22, the second attaching unit 880 may descend in the fifth direction D5, and in a state where the second label 890 is interposed between the side surface of the body 22 and the second attaching unit 880, the second attaching unit 880 may rotate in the clockwise direction. While the second attaching unit 880 rotates in the clockwise direction, the tube 10 positioned between the two adjacent rollers 180 may rotate in the counterclockwise direction, and the two adjacent rollers 180 may rotate in the clockwise direction. In this process, the second label 890 may be attached to the side surface of the body 22. In other words, while the second attaching unit 880 rotates in contact with the printed surface of the second label 890, the second label 890 may be separated from the release paper, and the adhesive surface of the second label 890 may be adhered to the side surface of the body 22. As the tube 10 rotates, the second label 890 may cover the side surface of the body 22.

Referring to FIGS. 1, 3, 26, and 27, the fourth defect product box 940 may be positioned adjacent to the second feeding device 170. As illustrated in FIG. 26, the fourth defect product box 940 may include an empty space. A second label defect tube 10 among tubes 10 inspected from the fourth vision inspection device 950 may be released to the empty space of the fourth defect product box 940.

The second removing member 220 may be positioned adjacent to the fourth defect product box 940. In other words, the second removing member 220 and the fourth defective product box 940 may face each other. The second removing member 220 may remove the tube 10 positioned on the second feeding device 170 from the second feeding device 170. For example, the second removing member 220 may include an air blower that removes the tube 10 positioned on the second feeding device 170 by using air. The tube 10 removed from the second feeding device 170 may be released to the empty space of the fourth defect product box 940.

For example, after the fourth vision inspection device 950 inspects whether a defect of the second labels 890, where the text is printed from the second printer 870, occurs, the second label 890 may be attached to the tube 10. A tube 10, where the second label 890 that the text printed on the second label 890 among the second labels 890 inspected from the fourth vision inspection device 950 is defective is attached, may be discharged to the fourth defect product box 940 through the second removing member 220.

In exemplary embodiments, the controller 2000 may control the second removing member 220 so that the tube 10, where the second label 890 that the printed text is defective among the second labels 890 inspected from the fourth vision inspection device 950 is attached, is released to the fourth defect product box 940.

In exemplary embodiments, while an inspection of a printing defect of the second label 890 is performed, the tube 10, where the second label 890 that the printed text is defective is attached, may be stored in the fourth defect product box 940, and the operator using the automated production system 1000 may predict a failure of the second labeling device 860 by counting the number of tubes 10 stored in the fourth defect product box 940 and checking the printed text of the second label 890 attached to the side surface of the tube 10 stored in the fourth defect product box 940. For example, when the number of tubes 10 stored in the fourth defect product box 940 is greater than or equal to a predetermined number, the operator may predict that a failure of the second printer 870 of the second labeling device 860 occurs.

The fifth vision inspection device 980 may inspect whether a defect of a position of the second label 890 attached to the side surface of the tube 10 positioned between two adjacent rollers 180 occurs. The fifth vision inspection device 980 may include a fifth camera 990. As illustrated in FIG. 26, the fifth camera 990 may be positioned spaced apart from the fourth camera 960 to capture a position of the second label 890 attached to the body 22 of the tube 10. In other words, the fifth camera 990 may be positioned to face the side surface of the body 22 of the tube 10 to capture the position of the second label 890 attached to the side surface of the body 22 of the tube 10.

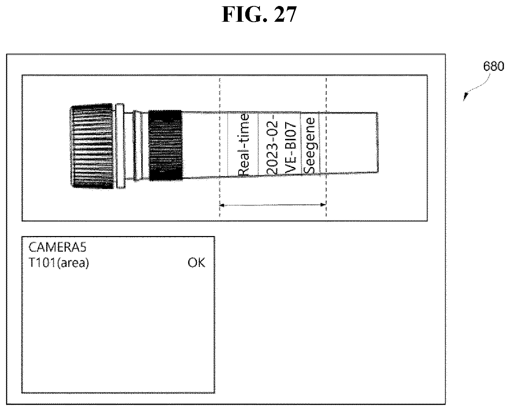

As illustrated in FIG. 27, the fourth display device 680 may display a fifth image captured from the fifth camera 990. In other words, the fourth display device 680 may display the position of the second label 890 attached to the side surface of the body 22.

For example, after the second labeling device 860 performs a process of attaching the second label 890 to the side surface of the body 22, the rollers 180 may be moved in the first direction D1. When the tube 10, where the second label 890 is attached, is positioned in front of the fixed fifth camera 990, the fifth camera 990 may capture the second label 890 attached to the side surface of the body 22.

In exemplary embodiments, the fifth vision inspection device 980 may control the fifth camera 990 so that the fifth camera 990 captures the second label 890 attached to the side surface of the body 22, and the fifth vision inspection device 980 may control the second display device 660 so that the fifth image captured from the fifth camera 990 is displayed on the fourth display device 680.

In exemplary embodiments, the fifth vision inspection device 980 may detect a position of the second label 890 from the fifth image. When the second label 890 is positioned within a predetermined range, the fifth vision inspection device 980 may determine that a position defect of the second label 890 in the captured tube 10 does not occur.

Otherwise, when the second label 890 is not positioned within the predetermined range, the fifth vision inspection device 980 may determine that the position defect of the second label 890 in the captured tube 10 occurs. For example, when the second attaching unit 880 attaches a portion of the second label 890 so as not to overlap with the side surface of the body 22, the portion of the second label 890 may protrude to an outside of the tube 10. In this case, a tube jamming phenomenon may be generated in a subsequent process device by a tube 10, where the position defect of the second label 890 occurs, may cause, and a failure of the subsequent process device may be generated. Therefore, when the second label 890 is not positioned within the predetermined range, the fifth vision inspection device 980 may determine that the position defect of the second label 890 occurs in the captured tube 10, and the fifth vision inspection device 980 may provide an information (e.g., a position information of the tube 10) of the tube 10 determined as the position defect to the controller 2000.

The fifth defect product box 970 may be positioned adjacent to the second feeding device 170. As illustrated in FIG. 26, the fifth defect product box 970 may include an empty space. A second label defect tube 10 among tubes 10 inspected from the fifth vision inspection device 980 may be released to the empty space of the fifth defect product box 970.

The third removing member 230 may be positioned adjacent to the fifth defect product box 970. In other words, the third removing member 230 and the fifth defect product box 970 may face each other. The third removing member 230 may remove the tube 10 positioned on the second feeding device 170 from the second feeding device 170. For example, the third removing member 230 may include an air blower that removes the tube 10 positioned on the second feeding device 170 by using air. The tube 10 removed from the second feeding device 170 may be released to the empty space of the fifth defect product box 970.

For example, after the fifth vision inspection device 980 inspects whether a defect of the second labels 890 attached to the side of the body 22 of each of the tubes 10 occurs, the rollers 180 may be moved in the first direction D1. A tube 10, where the position of the second label 890 attached to the side of the body 22 among the tubes 10 inspected from the fifth vision inspection device 980 is defective, may be released to the fifth defect product box 970 through the third removing member 230.

In exemplary embodiments, the controller 2000 may control the third removing member 230 so that the tube 10, where the position of the second label 890 attached to the side of the body 22 among the tubes 10 inspected from the fifth vision inspection device 980 is defective, is released to the fifth defect product box 970.

In exemplary embodiments, while during an inspection of the position defect of the second label 890 is performed, the tube 10, where the position that the second label 890 is attached is defective, may be stored in the fifth defect product box 970. The operator using the automated production system 1000 may count the number of tube 10 stored in the fifth defect product box 970 and check the position of the second label 890 attached to the side of the tube 10 stored in the fifth defect product box 970, and then may predict a failure of the second labeling device 860. For example, when the number of tube 10 stored in the fifth defect product box 970 is equal to or greater than a predetermined number, the operator may predict that the failure of the second attaching unit 880 of the second labeling device 860 has occurred.

As the automated production system 1000 according to exemplary embodiments of the present invention include the controller 2000, the first to third removing members 210, 220, and 230, the third vision inspection device 900, the fourth vision inspection device 950, the fifth vision inspection device 980, the third defect product box 910, the fourth defect product box 940, and the fifth defect product box 970, the controller 2000 that receives a position information of tube 10, where a defect has occurred, from the third to fifth vision inspection devices 900, 950, and 980 may control the first to third removing members 210, 220, and 230 so that the tube 10, where the defect has occurred, is released to the third to fifth defect product boxes 910, 940, and 970, respectively, and the operator using the automated production system 1000 may predict the cause of the defect tube 10 and check the type of defects. For example, the operator may count the number of tubes 10, where the first label is defective, stored in the third defect product box 910, and then may predict whether a failure of the first labeling device 800 occurs. The operator may check the tubes 10 where the first label is defective, and then may predict the type of defects (e.g., a failure of the first printer 810 or a failure of the first attaching unit 830).

In addition, the operator may count the number of tube 10, where the second label is defective, stored in the fourth defect product box 940, and then may predict whether a failure of the second printer 870 of the second labeling device 860 occurs. The operator may count the number of tube 10, where the second label is defective, stored in the fifth defect product box 970, and then may predict whether a failure of the second attaching unit 880 of the second labeling device 860 occurs. Accordingly, as the operator using the automated production system 1000 accurately predicts a failed equipment among the first printer 810 and the first attaching unit 830 of the first labeling device 800 and the second printer 870 and the second attaching unit 880 of the second labeling device 860, the failed equipment may be relatively quickly repaired or replaced to relatively reduce a supply error rate.

In addition, since the tube 10, where the first and second labels are defective, are stored in the third to fifth defect product boxes 910, 940, and 970, the tube 10, where the defect has occurred, may be isolated in the third to fifth defect product boxes 910, 940, 970, and the tube 10, where the defect has occurred, may not be fed to other feeding device. Accordingly, outflow of the tubes 10, where the defect has occurred, may be prevented.

As described above, although exemplary embodiments of the present invention have been described with reference to the above, those of ordinary skill in the art will understand that the present invention may be variously modified and changed without departing from the spirit and scope of the present invention described in the following claims.

### INDUSTRIAL APPLICABILITY

The present invention may be applied to various automated production systems capable of equipping automated facilities. For example, it may be applied to automated production systems including a dispensing device that dispenses a solution into a body, a capping device that caps a cap onto the body, a labeling device that labels a label onto a tube, and inspection devices that inspect the devices.

### <Explanation of symbols>

| | | | |
|---|---|---|---|
| 10: | tube | 22: | body |
| 27: | cap | 30: | solution |
| 100: | first feeding device | 110: | tube holding plate |
| 111, 112, 113, 114, 115, 116, 117, 118: | first to eighth grooves | | |
| 130: | first conveyor | 150: | body feeding device |
| 170: | second feeding device | 180: | roller |
| 190: | second conveyor | 200: | dispensing device |
| 210, 220, 230: | first to third removing members | | |
| 250, 260, 270, 280, 255, 265, 275, 285: | first to eighth dispensing units | | |
| 290: | first dispensing unit group | 295: | second dispensing unit group |
| 300: | cap feeding device | 310: | first cap feeding unit |
| 320: | second cap feeding unit | 400: | capping device |
| 410, 460, 415, 465: | first to fourth capping units | | |
| 420, 470, 425, 475: | first to fourth grippers | | |
| 430, 480, 435, 485: | first to fourth fixing members | | |
| 500: | first vision inspection device | 510: | first defect product box |
| 511, 512, 513, 514, 515, 516, 517, 518: | first to eighth dispensing defect spaces | | |
| 530: | first camera | 600: | second vision inspection device |
| 610, | 620: second defect product box | | |
| 611, 612, 613, 614, 615, 616, 617, 618: | first to eighth capping defect spaces | | |
| 615: | additional defect product box | 630: | second camera |
| 650: | first display device | 660: | second display device |
| 670: | third display device | 680: | fourth display device |
| 700: | transferring device | 710: | transferring unit |
| 730: | transferring grippers | 800: | first labeling device |
| 810: | first printer | 830: | first attaching unit |
| 850: | first label | 860: | second labeling device |
| 870: | second printer | 880: | second attaching unit |
| 890: | second label | 900: | third vision inspecting device |
| 910: | third defect product box | 930: | third camera |
| 940: | fourth defect product box | 950: | fourth vision inspecting device |
| 960: | fourth camera | 970: | fifth defect product box |
| 980: | fifth vision inspecting device | 990: | fifth camera |
| 1000: | automated production system | 2000: | controller |

## Claims

1. An automated production system handling a tube capable of containing a solution and a body capped with a cap being defined as the tube, the system comprising:
a first feeding device feeding a plurality of grouped bodies or a plurality of grouped tubes, each of the grouped bodies including at least two bodies, each of the grouped tubes including at least two tubes;
a dispensing device including dispensing units that dispense a solution to each of the bodies included in one grouped bodies among the plurality of grouped bodies, in a single dispensing process step;
a first vision inspection device inspecting whether a dispensing defect of the solution contained in each of the bodies included in one grouped bodies occurs, in a single dispensing defect inspection process step;
a first defect product box including dispensing defect spaces where the number of the dispensing defect spaces is the same as the number of the dispensing units;
a transferring device transferring each of the tubes included in one grouped tubes by gripping each of the tubes; and
a controller configured to control the transferring device so that a dispensing defect tube among the tubes included in one grouped tubes inspected from the first vision inspection device is released to a predetermined dispensing defect space among the dispensing defect spaces.

2. The system of claim 1, wherein the number of the bodies included in one grouped bodies or the number of the tubes included in one grouped tubes is the same as the number of the dispensing units and the number of the dispensing defect spaces.

3. The system of claim 1, wherein the tubes included in one grouped tubes include first to n-th tubes, where n is an integer more than 4, the dispensing units include first to n-th dispensing units, and the first defect product box includes first to n-th dispensing defect spaces,
wherein the controller is configured to control the transferring device so that a k-th tube among the first to n-th tubes is released to a k-th dispensing defect space among the first to n-th dispensing defect spaces, when the first vision inspection device detects a dispensing defect of the k-th tube, where k is an integer between 1 and n, and
wherein the transferring device provides remaining tubes except for the k-th tube among the first to n-th tubes to an external feeding device, after the k-th tube is released to the k-th dispensing defect space.

4. The system of claim 1, further comprising:
a cap feeding device providing the cap to each of the bodies included in one grouped bodies where the solution is dispensed, in a single cap feeding process step; and
a capping device including capping units that caps the cap provided to each of the bodies included in one grouped bodies, in a single capping process step.

5. The system of claim 4, further comprising:
a second vision inspection device inspecting whether a capping defect of the cap capped with each of the bodies included in one grouped bodies occurs, in a single capping defect inspection process step; and
a second defect product box including capping defect spaces where the number of the capping defect spaces is the same as or greater than the number of the capping units.

6. The system of claim 5, wherein the controller is configured to control the transferring device so that a capping defect tube among the tubes included in one grouped tubes inspected from the second vision inspection device is released to a predetermined capping defect space among the capping defect spaces.

7. The system of claim 5, wherein the tubes included in one grouped tubes include first to n-th tubes, where n is an integer more than 4, and the second defect product box includes first to n-th capping defect spaces,
wherein the controller is configured to control the transferring device so that a j-th tube among the first to n-th tubes is released to a j-th capping defect space among the first to n-th capping defect spaces, when the second vision inspection device detects a capping defect of the j-th tube, where j is an integer between 1 and n, and
wherein the transferring device provides remaining tubes except for the j-th tube among the first to n-th tubes to an external feeding device, after the j-th tube is released to the j-th capping defect space.

8. The system of claim 5, wherein the tubes included in one grouped tubes include first to n-th tubes, where n is an integer more than 4, and the capping units include first to (n/2)th capping units, and
wherein the second defect product box includes first to (n/2)th capping defect spaces.

9. The system of claim 5, wherein the first vision inspection device includes a first camera tilted at a predetermined angle from an upper surface of the solution to capture the upper surface of the solution contained in the body, and
wherein the second vision inspection device includes a second camera facing the capped cap to capture a shape of the cap capped with the body.

10. The system of claim 9, further comprising:
a first display device displaying the upper surface of the solution contained in the body and the shape of the cap capped with the body.

11. The system of claim 1, further comprising:
a second feeding device sequentially feeding the tubes;
a first labeling device attaching a first label to the cap of each of the tubes;
a third vision inspection device inspecting whether a defect of the first label attached to the cap of each of the tubes occurs;
a second labeling device attaching a second label to the body of each of the tubes;
fourth and fifth vision inspection devices inspecting whether a defect of the second label attached to the body of each of the tubes occurs;
a third defect product box where a first label defect tube among the tubes inspected from the third vision inspection device is released; and
fourth and fifth defect product boxes where a second label defect tube among the tubes inspected from the fourth and fifth vision inspection devices is released.

12. The system of claim 11, further comprising:
first, second, and third removing members positioned adjacent to the third, fourth, and fifth defect product boxes, the first, second, and third removing members removing the tube located in the second feeding device from the second feeding device.

13. The system of claim 12, wherein each of the first, second, and third removing members includes an air blower removing the tube located in the second feeding device by using air.

14. The system of claim 12, wherein the first labeling device includes:
a first printer printing a text on the first label; and
a first attaching unit attaching the printed first label to the cap of the tube,
wherein the third vision inspection device includes a third camera facing the cap to capture the text printed on the first label that is attached to the cap and a position of the first label attached to the cap, and
wherein the system further comprises a second display device displaying the text printed on the first label that is attached to the cap and a position of the first label attached to the cap.

15. The system of claim 14, wherein the controller is configured to control the first removing member so that a tube, where the text printed on the first label that is attached to the cap among the tubes inspected from the third vision inspection device is defective, and/or a tube, where the position of the first label that is attached to the cap among the tubes inspected from the third vision inspection device is defective, are/is released to the third defect product box.

16. The system of claim 14, wherein the second labeling device includes:
a second printer printing a text on the second label; and
a second attaching unit attaching the printed second label to the body of the tube,
wherein the fourth vision inspection device includes a fourth camera facing the printed second label between the second printer and the second attaching unit to capture the text printed on the second label,
wherein the fifth vision inspection device includes a fifth camera spaced apart from the fourth camera to capture a position of the second label attached to the body, and
wherein the system further comprises:
a third display device displaying the text printed on the second label; and
a fourth display device displaying the position of the second label attached to the body.

17. The system of claim 16, wherein the controller is configured to control:
the second removing member so that a tube attaching a second label, where the printed text is defective, among the second labels including the printed text which are inspected from the fourth vision inspection device is released to the fourth defect product box, and
the third removing member so that a tube, where the position of the second label attached to the body among the tubes inspected from the fifth vision inspection device is defective, is released to the fifth defect product box.

18. An automated production system handling a tube capable of containing a solution and a body capped with a cap being defined as the tube, the system comprising:
a first feeding device feeding a plurality of grouped bodies or a plurality of grouped tubes, each of the grouped bodies including at least two bodies, each of the grouped tubes including at least two tubes;
a dispensing device including dispensing units that dispense a solution to each of the bodies included in one grouped bodies among the plurality of grouped bodies, in a single dispensing process step;
a cap feeding device providing the cap to each of the bodies included in one grouped bodies where the solution is dispensed, in a single cap feeding process step;
a capping device including capping units that cap the cap provided to each of the bodies included in one grouped bodied, in a single capping process step;
a first vision inspection device inspecting whether a dispensing defect of the solution contained in each of the bodies included in one grouped bodies occurs, in a single dispensing defect inspection process step;
a second vision inspection device inspecting whether a capping defect of the cap capped with each of the bodies included in one grouped bodies occurs, in a single capping defect inspection process step;
a first defect product box including dispensing defect spaces where the number of the dispensing defect spaces is the same as the number of the dispensing units;
a second defect product box including capping defect spaces where the number of the capping defect spaces is the same as or greater than the number of the capping units;
a transferring device transferring each of the tubes included in one grouped tubes by gripping each of the tubes;
a second feeding device sequentially feeding the tubes;
a first labeling device attaching a first label to the cap of each of the tubes;
a third vision inspection device inspecting whether a defect of the first label attached to the cap of each of the tubes occurs;
a second labeling device attaching a second label to the body of each of the tubes;
fourth and fifth vision inspection devices inspecting whether a defect of the second label attached to the body of each of the tubes occurs;
a third defect product box where a first label defect tube among the tubes inspected from the third vision inspection device is released;
fourth and fifth defect product boxes where a second label defect tube among the tubes inspected from the fourth and fifth vision inspection devices is released;
a controller configured to control the transferring device so that a dispensing defect tube of the tubes included in one grouped tubes inspected from the first vision inspection device is released to a predetermined dispensing defect space of the dispensing defect spaces;
first, second, and third removing members positioned adjacent to the third, fourth, and fifth defect product boxes, the first, second, and third removing members removing the tube located in the second feeding device from the second feeding device; and
a controller configured to control:
the transferring device so that a dispensing defect tube among the tubes included in one grouped tubes inspected from the first vision inspection device is released to a predetermined dispensing defect space among the dispensing defect spaces;
the transferring device so that a capping defect tube among the tubes included in one grouped tubes inspected from the second vision inspection device is released to a predetermined capping defect space among the capping defect spaces;
the first removing member so that a tube, where a text printed on the first label that is attached to the cap among the tubes inspected from the third vision inspection device is defective, and/or a tube, where a position of the first label that is attached to the cap among the tubes inspected from the third vision inspection device is defective, are/is released to the third defect product box;
the second removing member so that a tube attaching a second label, where the printed text is defective, among the second labels including the printed text which are inspected from the fourth vision inspection device is released to the fourth defect product box, and
the third removing member so that a tube, where the position of the second label attached to the body among the tubes inspected from the fifth vision inspection device is defective, is released to the fifth defect product box.

19. An automated production system handling a tube capable of containing a solution, the system comprising:
a feeding device feeding a plurality of grouped tubes, each of the grouped tubes including at least two tubes;
a first processing device including a plurality of first units that perform a first process to each of tubes included in one grouped tubes among the plurality of grouped tubes, in a single first process step;
a first inspection device inspecting a first defect type of each of the tubes included in one grouped tubes;
a first defect product box including first defect spaces where the number of the first defect spaces is the same as the number of the first units;
a transferring device transferring each of the tubes included in one grouped tubes by gripping each of the tubes; and
a controller configured to control the transferring device so that a tube, which corresponds to the first defect type, among the tubes included in one grouped tubes inspected from the first inspection device is released to a predetermined first defect space among the first defect spaces.

20. The system of claim 19, further comprising:
a second processing device including a plurality of second units that perform a second process to each of the tubes included in one grouped tubes, in a single second process step;
a second inspection device inspecting a second defect type, which is different from the first defect type, of the tubes; and
a second defect product box including second defect spaces where the number of the second defect spaces is the same as the number of the second units,
wherein the controller is configured to control the transferring device so that a tube, which corresponds to the second defect type, among the tubes included in one grouped tubes inspected from the second inspection device is released to a predetermined second defect space among the second defect spaces.
